# EUROPÄISCHE PATENTSCHRIFT

(11) **EP 4 150 137 B1**
(45) Veröffentlichungstag und Bekanntmachung des Hinweises auf die Patenterteilung: **29.05.2024**
(21) Anmeldenummer: 21716325.2
(22) Anmeldetag: 30.03.2021
(51) Int. Cl.: C25B 9/75, C25B 9/77, H01M 4/86, H01M 4/88, H01M 8/24, H01M 8/241, C25B 11/032, H01M 8/1004

(54) **ZELLENSTAPEL, VERFAHREN ZUR HERSTELLUNG EINES ZELLENSTAPELS SOWIE BRENNSTOFFZELLE ODER ELEKTROLYSEZELLE UMFASSEND EINEN ZELLENSTAPEL**
CELL STACK, METHOD FOR PRODUCING A CELL STACK AND FUEL CELL OR ELECTROLYSIS CELL COMPRISING A CELL STACK
EMPILEMENT DE CELLULES, PROCÉDÉ DE PRODUCTION D'UN EMPILEMENT DE CELLULES, ET PILE À COMBUSTIBLE OU CELLULE D'ÉLECTROLYSE COMPRENANT UN EMPILEMENT DE CELLULES

(30) Priorität: 13.05.2020 DE 102020112988
(43) Veröffentlichungstag der Anmeldung: 22.03.2023
(73) Patentinhaber: Greenerity GmbH, 63755 Alzenau (DE)
(72) Erfinder: ANDERSCH, Stefan, 73033 Göppingen (DE); SUCHSLAND, Jens-Peter, 63755 Alzenau (DE); GEHRIG, Dominik, 63454 Hanau (DE)
(74) Vertreter: Hoefer & Partner Patentanwälte mbB
(86) Internationale Anmeldenummer: PCT/EP2021/058262
(87) Internationale Veröffentlichungsnummer: WO 2021/228466

(56) Entgegenhaltungen:
- EP-A1- 3 089 251
- DE-A1-102011 006 651
- OH HWANYEONG ET AL: "Effects of pore size gradient in the substrate of a gas diffusion layer on the performance of a proton exchange membrane fuel cell", APPLIED ENERGY, ELSEVIER SCIENCE PUBLISHERS, GB, Bd. 149, 10. April 2015 (2015-04-10), Seiten 186-193, XP029157667, ISSN: 0306-2619, DOI: 10.1016/J.APENERGY.2015.03.072

## Beschreibung

Die Erfindung betrifft einen Zellenstapel mit einer gleichmäßigen Dickenverteilung sowie ein Verfahren zur Herstellung eines solchen Zellenstapels. Darüber hinaus betrifft die vorliegende Erfindung auch eine Brennstoffzelle oder eine Elektrolysezelle, die diesen Zellenstapel umfasst.

Gasdiffusionslagen für elektrochemische Anwendungen, wie insbesondere Brennstoffzellen, können herstellungsbedingt eine ungleichmäßige Dickenverteilung aufweisen. Beispielhafte Dickenvariationen sind lineare Dickengradienten, konkave, konvexe oder wellenförmige Ausprägungen, die in mindestens einem Teilbereich einer Gasdiffusionslage vorherrschen können. Gasdiffusionslagen werden üblicherweise als Rollenware bereitgestellt, die eine Längsmaschinenrichtung (das ist die Richtung, in der die Rolle aufgewickelt bzw. abgewickelt wird) und eine Quermaschinenrichtung (das ist die Richtung, die senkrecht zur Längsmaschinenrichtung verläuft und somit die Breite der Rolle ergibt) aufweisen. Derartige Gasdiffusionslagenrollen weisen herstellungsbedingt insbesondere in der Quermaschinenrichtung eine Dickenvariation auf, wobei unter einer Dickenvariation ein Dickengradient in der Schichtdicke einer Gasdiffusionslage in Quermaschinenrichtung verstanden wird. Ein Dickengradient der Gasdiffusionslage resultiert in einer ungleichmäßigen Dickenverteilung innerhalb einer Einzelzelle eines Zellenstapels und damit in einer ungleichmäßigen Druckverteilung innerhalb der Einzelzelle und sodann innerhalb des Zellenstapels. Aufgrund der hohen Schichtdicke der Gasdiffusionslagen im Vergleich zu den Schichtdicken der übrigen Schichten in einem Zellenstapel, ist eine inhomogene Dickenverteilung der Gasdiffusionslage besonders kritisch. Eine ungleichmäßige Druckverteilung führt wiederum zu einer ungleichmäßigen Kompression der Gasdiffusionslagen, wodurch Eigenschaften wie Kontaktwiderstand, Massentransport insbesondere von Wasser und Reaktanden innerhalb einer Zelle, ungleichmäßig sein können, wodurch ein stabiler Betrieb nicht gewährleistet werden kann.

Darüber hinaus führt ein systematischer Dickengradient, insbesondere bei linearen Dickengradienten, bei der Anwendung im Zellenstapel, also der Aneinanderreihung vieler Einzelzellen, die mehrere Hundert Gasdiffusionslagen (GDL) umfassen kann, in der Summe zu einer stark ausgeprägten ungleichmäßigen Dickenverteilung, wodurch eine Assemblierung des Zellenstapels erschwert oder sogar nicht mehr möglich wird. DE102011006651A1 offenbart einen MEA-Brennstoffzellenstapel mit einer Gasdiffusionsschicht (GDL) zwischen MEA und einer Bipolarplatte. Die GDL hat eine Struktur, die den Kontaktwiderstand an den Grenzflächen in einer Brennstoffzelle reduziert und eine Steifigkeit in einer Breitenrichtung senkrecht zu einer Hauptströmungsfeldrichtung einer Bipolarplatte aufweist.

Es ist Aufgabe der Erfindung einen Zellenstapel mit möglichst gleichmäßiger Dickenverteilung bereitzustellen sowie ein Verfahren zur Herstellung eines Zellenstapels mit gleichmäßiger Dickenverteilung anzugeben. Darüber hinaus ist es eine Aufgabe der Erfindung eine Brennstoffzelle oder eine Elektrolysezelle mit dauerhaft hoher und stabiler Leistungsdichte anzugeben.

Die Lösung dieser Aufgaben erfolgt durch die Merkmale der unabhängigen Ansprüche. Die abhängigen Ansprüche beinhalten vorteilhafte Weiterbildungen und Ausgestaltungen der Erfindung.

Demnach erfolgt die Lösung durch die Bereitstellung eines Zellenstapels, der eine Vielzahl an Einzelzellen umfasst, wobei jede Einzelzelle eine Membranelektrodenanordnung mit einer Kathode, einer Anode und einer dazwischenliegenden Membran, sowie eine auf der freiliegenden Seite der Anode, also auf der der Membran abgewandten Seite der Anode angeordnete Anodengasdiffusionslage (im Folgenden: AGDL) und eine auf der freiliegenden Seite der Kathode, also ebenfalls auf der der Membran abgewandten Seite der Kathode angeordnete Kathodengasdiffusionslage (KGDL) umfasst. Alternativ zu einer Anodengasdiffusionslage kann auch eine gesinterte Titankomponente, ein sogenannter Titansinter, vorhanden sein, wie es für Elektrolysezellen oftmals üblich ist. In diesem Fall ist aber zumindest eine KGDL vorhanden.

Sowohl die KGDL als auch die AGDL (sofern vorhanden), weisen in Quermaschinenrichtung jeweils einen Dickengradient auf, wobei der Dickengradient der AGDL ein erster Dickengradient ist und der Dickengradient der KGDL ein zweiter Dickengradient ist. Unter einem Dickengradient in Quermaschinenrichtung wird gemäß der vorliegenden Erfindung eine sich örtlich in Richtung der Quermaschinenrichtung ändernde Schichtdicke der entsprechenden Gasdiffusionslage (im Folgenden: GDL) verstanden.

Als Quermaschinenrichtung wird dabei die Richtung verstanden, die senkrecht zu einer Abrollrichtung bzw. Aufrollrichtung von als Rollenware vorliegenden GDL verläuft. Im Sinne der vorliegenden Erfindung werden die Gasdiffusionslagenware als Rollenware hergestellt und bereitgestellt. Dies bedeutet, dass die Schichten der GDL vor dem Vereinzeln zu GDL zunächst zusammenhängen und sowohl nebeneinander in einer Reihe entlang der Breite der GDL-Rollenware als auch in entsprechenden Reihen hintereinander in Form einer Art Teppich vorliegen. Die Aufrollrichtung bzw. Abrollrichtung dieses Teppichs ist die Längsmaschinenrichtung. Die Quermaschinenrichtung verläuft senkrecht zur Längsmaschinenrichtung und ist damit auch mit der Breite der Rollenware zu vergleichen. Eine GDL wird also in Längsmaschinenrichtung und auch in Quermaschinenrichtung aufgespannt und hat eine gewisse Schichtdicke, die senkrecht zur Längsmaschinenrichtung und zur Quermaschinenrichtung verläuft.

Wird nun eine GDL in Quermaschinenrichtung betrachtet, so weist ihre Schichtdicke in dieser Richtung einen Dickengradient auf. Die Schichtdicke ändert sich somit entlang der Quermaschinenrichtung, und zwar zumindest in einem Teilbereich der betrachteten GDL.

In einer Einzelzelle sind die AGDL und die KGDL so zueinander angeordnet, dass der erste Dickengradient der AGDL und der zweite Dickengradient der KGDL gegenläufig sind. Somit gleicht sich die Dickenverteilung innerhalb dieser Einzelzelle aus bzw. heben sich die Dickenunterschiede vorzugsweise gegenseitig auf. Damit können Druckunterschiede innerhalb der Einzelzelle reduziert und sogar minimiert werden, so dass eine Druckverteilung innerhalb der Schichten der Einzelzelle homogen ist und Druckspitzen vermieden werden. Dies führt ferner dazu, dass die Einzelzelle dauerhaft eine hohe Leistungsdichte bereitstellen kann.

Gemäß einer Alternative sind in zwei oder mehr Einzelzellen die AGDL so zueinander angeordnet, dass ein Gesamtdickengradient dieser AGDL minimiert ist. Dies bedeutet, dass wenn man den Zellenstapel lediglich auf der Anodenseite betrachtet, die AGDL mit ihren ersten Dickengradienten so angeordnet sind, dass sich Dickenunterschiede, die vom ersten Dickengradient herrühren, ausgleichen. Es wird also nicht auf die Dickenverteilung in einer Einzelzelle abgestellt, sondern es sind alle AGDL der Anodenseite spezifisch im Hinblick auf einen Dickenausgleich, mit anderen Worten einen Ausgleich des ersten Dickengradienten, ausgerichtet und angeordnet. Somit weist der Zellenstapel auf der Anodenseite eine möglichst homogene Dickenvariation auf, wodurch auf der Anodenseite Druckunterschiede, beispielsweise bei der Assemblierung des Zellenstapels, vermindert oder sogar verhindert werden können. Dies trägt ebenfalls zu einer Verbesserung der Leistungsdichte des Zellenstapels bei.

Aus vorstehend genannten Gründen ist gemäß der vorliegenden Erfindung alternativ oder additiv vorgesehen, dass in zwei oder mehr Einzelzellen die KGDL so zueinander angeordnet sind, dass ein Gesamtdickengradient dieser KGDL minimiert ist. Es werden damit alle im Zellenstapel zu verwendenden KGDL hinsichtlich ihres jeweiligen Dickengradienten so ausgerichtet, dass über alle KGDL hinweg die Dickenunterschiede minimiert werden. Besonders vorteilhaft für die Leistungsdichte des Zellenstapels ist es, wenn sowohl die AGDL als auch die KGDL jeweils so ausgerichtet werden, dass ihre Gesamtdickengradienten minimiert werden.

Gemäß einer vorteilhaften Weiterbildung sind in allen Einzelzellen des Zellenstapels die AGDL und die KGDL jeweils so zueinander angeordnet, dass der erste Dickengradient der AGDL und der zweite Dickengradient der KGDL je Einzelzelle gegenläufig sind. Somit kann eine beliebige Anzahl von Einzelzellen übereinander zu einem Zellenstapel gestapelt werden, wobei aufgrund dessen, dass die Dickengradienten pro Einzelzelle minimiert und damit ausgeglichen sind, auch der Zellenstapel über eine minimierte Dickenvariation verfügt und somit Druckunterschiede zwischen den Schichten der Einzelzellen reduziert und sogar verhindert werden können. Dies verbessert die dauerhafte Leistungsdichte des Zellenstapels.

Gemäß einer weiteren vorteilhaften Weiterbildung sind der erste Dickengradient der AGDL und der zweite Dickengradient der KGDL linear. Dies bedeutet, dass beide Dickengradienten eine konstante Steigung aufweisen, die Schichtdicke der GDL zumindst in einem Teilbereich der GDL also konstant abnimmt oder zunimmt. Hierdurch lassen sich Dickenunterschiede bzw. Dickenvariationen im Zellenstapel besonders einfach ausgleichen, so dass Druckunterschiede im Zellenstapel deutlich reduziert werden können, was zur Stabilität und dauerhaft hohen Leistungsdichte des Zellenstapels beiträgt.

Weiter vorteilhaft umfassen die AGDL und die KGDL jeweils eine mikroporöse Schicht und ein makroporöses Trägermaterial wobei die mikroporöse Schicht der AGDL zur Anode orientiert ist und die mikroporöse Schicht der KGDL zur Kathode orientiert ist. Die Verwendung einer mikroporösen Schicht erlaubt einen besonders vorteilhaften Massentransport und damit eine besonders vorteilhafte Versorgung der Anode mit Reaktionsgasen (im Falle einer Brennstoffzelle: Wasserstoff für die Anode und Sauerstoff für die Kathode). Weiterhin reduziert die Verwendung einer mikroporösen Schicht den Kontaktwiderstand zwischen einer katalysatorbeschichteten Membran und einer GDL.

Die mikroporöse Schicht kann dabei insbesondere definierte Mengen an Polytetrafluorethylen (PTFE) enthalten, um die hydrophoben Eigenschaften der mikroporösen Schicht zu beeinflussen, wodurch das Abfließverhalten von in der Einzelzelle gebildetem oder enthaltenem Wasser gesteuert werden kann. Auch kann ein kohlenstoffhaltiges Material enthalten sein, wie z.B. Ruß oder Graphit, über das ebenfalls die hydrophoben und hydrophilen Eigenschaften der mikroporösen Schicht gesteuert werden können. Als Trägermaterialien sind u.a. Papier-Typ und Vlies-Typ Materialien vorteilhaft, die aus karbonisierten Polyacrylnitrilfasern mit insbesondere einem durchschnittlichen Durchmesser von 7 µm gebildet sein können. Die mikroporöse Schicht zeichnet sich, im Vergleich zum Trägermaterial, durch eine deutlich glattere Oberfläche und Struktur aus, die eine sehr gute Kontaktierung der Elektrode (Kathode oder Anode) ermöglicht, was in einem geringen elektrischen Widerstand resultiert.

Eine weitere vorteilhafte Weiterbildung sieht vor, dass die AGDL und/oder die KGDL einer Einzelzelle eine Schichtdicke in einem Bereich von 100 µm bis 300 µm aufweisen. Aufgrund der relativ großen Schichtdicke der GDL in Relation zu den Schichtdicken der weiteren Komponenten der Membranelektrodenanordnung (MEA) kann für die Reaktionsgase ein sehr gutes Flussfeld bereitgestellt werden, das eine homogene Verteilung der Reaktionsgase ermöglicht. Die Schichtdicke einer GDL wird dabei als Mittelwert von zehn Messwerten, die in gleichen Abständen bei einem definierten Messdruck von 1 MPa über die gesamte Breite der GDL ermittelt werden, definiert.

Vorzugsweise ist das Trägermaterial ausgewählt aus einem Vlies-Typ und einem Papier-Typ.

Weiter vorteilhaft ist die Membranelektrodenanordnung umlaufend durch ein Randmaterial eingefasst. Das Randmaterial kann dabei eine Trägerfolie sowie eine adhäsive Schicht umfassen, die eine sehr gute Gasdichtigkeit des Verbunds aus Randmaterial und MEA gewährleisten. Weiterhin schützt das Randmaterial die MEA insbesondere im Bereich der GDL-Kanten vor GDL-Fasern, die die MEA durchstechen und somit einen elektrischen Kurzschluss verursachen können. Ein elektrischer Kurzschluss führt zu einer reduzierten Lebensdauer oder zu einem Totalausfall der MEA.

Weiter vorteilhaft werden auch eine Brennstoffzelle bzw. eine Elektrolysezelle beschrieben, die einen wie vorstehend offenbarten Zellenstapel umfassen. Aufgrund der Verwendung des Zellenstapels, der sich durch ausgeglichene Dickenunterschiede auszeichnet, weist auch die Brennstoffzelle bzw. die Elekrolysezelle eine homogene Dicke auf, wodurch eine dauerhaft hohe Leistungsdichte erzielt werden kann.

Ebenfalls erfindungsgemäß wird auch ein Verfahren zur Herstellung eines Zellenstapels beschrieben. Der Zellenstapel ist wie vorstehend ausgeführt ausgebildet und umfasst eine Vielzahl an Einzelzellen, wobei jede Einzelzelle eine MEA mit einer Kathode, einer Anode und einer dazwischenliegenden Membran, sowie eine auf der freiliegenden Seite der Anode angeordnete AGDL mit einem ersten Dickengradient in Quermaschinenrichtung oder eine gesinterte Titankomponente und eine auf der freiliegenden Seite der Kathode angeordnete KGDL mit einem zweiten Dickengradient in Quermaschinenrichtung umfasst. Das Verfahren ist geeignet den erfindungsgemäßen Zellstapel herzustellen.

Gemäß dem erfindungsgemäßen Verfahren werden in mindetens einer Einzelzelle und insbesondere in allen Einzelzellen die AGDL und die KGDL pro Einzelzelle jeweils so zueinander angeordnet, dass der erste Dickengradient der AGDL und der zweite Dickengradient der KGDL gegenläufig sind. Hierdurch können Dickenunterschiede bzw. Dickenvariationen in den GDL ausgeglichen werden, so dass jede Einzelzelle, die diesen erfindungsgemäßen Schritt durchlaufen hat, über eine ausbalancierte gleichmäßige Dickenverteilung verfügt. Somit können Einzelzellen mit gleichmäßiger Schichtdickenverteilung übereinander gestapelt werden, ohne dass es zu punktuellen oder lokalen Druckbelastungen kommt. Vielmehr werden beim Stapeln der Einzelzellen Druckspitzen vermieden, so dass Schäden in den Schichten der Einzelzellen aufgrund von einwirkenden Drücken vermieden werden. Ein derart hergestellter Zellenstapel zeichnet sich durch eine dauerhaft hohe Leistungsdichte aus.

Gemäß einer alternativen Ausführung werden in zwei oder mehr Einzelzellen die AGDL so zueinander angeordnet, dass ein Gesamtdickengradient dieser AGDL minimiert wird. Vorteilhaft werden die AGDL damit vor dem Assemblieren der Einzelzellen zum Zellstapel so ausgerichtet, dass wenn man nur die Anodenseite des Zellenstapels betrachtet, sich eine gleichmäßige Dickenverteilung der AGDL ergibt, so dass Dickenvariationen vermieden und ausgeglichen werden. Ein auf den Zellenstapel angewendeter Druck wirkt damit gleichförmig auf alle enthaltenen Schichten, wodurch Schäden innerhalb der Schichten vermieden werden.

Gemäß einer alternativen oder additiven Ausführung werden aus vorstehend genannten Gründen in zwei oder mehr Einzelzellen die KGDL so zueinander angeordnet, dass ein Gesamtdickengradient dieser Kathodengasdiffusionslagen minimiert wird.

Insbesondere wenn auf der Kathodenseite und auf der Anodenseite die jeweiligen GDL so zueinander ausgerichtet werden, dass Dickenunterschiede minimiert werden, kann ein Zellenstapel mit besonders gleichförmiger Schichtanordnung erhalten werden, der stabil ist gegenüber einwirkenden Drücken, die gleichmäßig über die gesamte Fläche der Schichten verteilt werden, so dass eine dauerhaft besonders hohe Leistungsdichte im Zellstapel erhalten werden kann.

Vorteilhaft werden die Gasdiffusionslagen (KGDL und AGDL) als Rollenware bereitgestellt und nach dem Abrollen zu GDL vereinzelt, wobei zum Vereinzeln der Gasdiffusionslagen GDL nacheinander von einer Rolle in Quermaschinenrichtung entnommen und nacheinander entnommene GDL so verwendet werden, dass jede zweite entnommene GDL um 180° relativ zur Quermaschinenrichtung gedreht wird und die nicht gedrehten und gedrehten GDL abwechselnd als AGDL und KGDL verwendet werden. Dies beduetet mit anderen Worten, dass GDL von einer abgerollten Fläche der Rollenware entnommen werden, z.B. durch Ausschneiden oder Ausstanzen oder jeglichen anderen Vereinzelungsprozess. Dabei wird so vorgegangen, dass die Rollenware zumindest soweit abgerollt wird, dass die Länge der zu vereinzelnden GDL freiliegt. Sodann wird eine erste GDL beginnend an einem Längsrand der abgerollten Rollenware in Ausdehnungsrichtung des zweiten Längsrands, also über die Breite der Rolle, vereinzelt. Im Anschluss daran wird eine zweite GDL in Richtung des zweiten Längsrands vereinzelt. Diese Vereinzelung wird solange fortgeführt, bis der zweite Längsrand erreicht ist. Sodann wird mit einer nächsten Reihe beginnend wieder vom ersten Längsrand zum zweiten Längsrand angefangen und eine weitere GDL vereinzelt und so fort.

Für die vorstehende Ausführungsform bestehen nach dem Vereinzeln der GDL prinzipiell zwei Möglichkeiten:
Gemäß einer ersten Möglichkeit werden die jeweiligen vereinzelten GDL übereinander gestapelt, also beispielhaft eine vierte GDL aus einer ersten Reihe in Quermaschiennrichtung über einer dritten GDL aus der ersten Reihe in Quermaschiennrichtung, die dritte GDL über der zweiten GDL aus einer ersten Reihe in Quermaschiennrichtung und zu unterst die erste GDL aus der ersten Reihe in Quermaschiennrichtung. Es ergibt sich ein GDL-Stapel, wobei in dem Stapel jede zweite GDL um 180° relativ zur Quermaschinenrichtung gedreht wird.
Gemäß einer zweiten Möglichkeit kann das Drehen jeder zweiten GDL um 180° relativ zur Quermaschinenrichtung auch erst bei der Stapelung der Schichten zu einer Einzelzelle erfolgen.

Wichtig ist, dass in beiden Fällen von nacheinander von der GDL-Rolle entnommenen GDL jede zweite um 180° gedreht wird, so dass nicht gedrehte und gedrehte GDL abwechselnd als AGDL und KGDL in derselben Einzelzelle verwendet werden.

Die vorstehende Ausführungsform wird anhand eines Beispiels verdeutlicht. Angenommen, über die gesamte Breite einer GDL-Rolle können vier GDL hintereinander vereinzelt werden, und die GDL-Rolle weist in Quermaschinenrichtung einen linearen Dickengradient auf, so weisen die vier nacheinander in Quermaschinenrichtung vereinzelte GDL jeweils dieselbe konstante Steigung auf. Hierbei handelt es sich um eine erste GDL, eine zweite GDL, eine dritte GDL und eine vierte GDL. Die zweite und die vierte GDL werden in Quermaschinenrichtung um 180° gedreht. Diese vier GDL werden beispielsweise übereinander gestapelt und für die weitere Verarbeitung bereitgehalten. Die vierte GDL wird über die dritte GDL, die dritte GDL über die zweite GDL und die zweite GDL über die erste GDL gelegt. Durch die Drehung in Quermaschinenrichtung um 180° der zweiten und vierten GDL gleichen sich die Dickengradienten der vier übereinander gestapelten GDL aus. Werden diese vier GDL nun in einem Zellenstapel verwendet, ergeben sich die folgenden Möglichkeiten:
In einem ersten Fall können für eine erste Einzelzelle die vierte GDL z.B. als AGDL und die dritte GDL als KGDL verwendet werden. Somit wird eine Einzelzelle erhalten, in der Dickenunterschiede der GDL minimiert und, aufgrund derselben Steigung der Schichtdicken der GDL sogar aufgehoben werden.

In einem zweiten Fall können beispielsweise alle vier GDL als AGDL auf der jeweiligen Anodenseite von vier Einzelzellen verwendet werden. Durch die Drehung der zweiten und vierten GDL in Quermaschinenrichtung um 180° gleichen sich auch im Zellenstapel auf der Anodenseite die Dickenunterschiede aus. Mit anderen Worten heben sich die Dickengradienten auf.

In einem dritten Fall können beispielsweise alle vier GDL als KGDL auf der jeweiligen Anodenseite von vier Einzelzellen verwendet werden. Durch die Drehung der zweiten und vierten KDL in Quermaschinenrichtung um 180° gleichen sich auch in Zellenstapel auf der Kathodenseite die Dickenunterschiede aus. Mit anderen Worten heben sich die Dickengradienten auf.

In einem vierten Fall können jeweils zwei übereinanderliegende GDL in zwei Einzelzellen auf der Anodenseite und auf der Kathodenseite eingesetzt werden. Somit befindet sich jeweils eine GDL pro Anodenseite und eine GDL pro Kathodenseite im Originalzustand, also ungedreht, und jeweils eine GDL pro Anodenseite und eine GDL pro Kathodenseite um 180° in Maschinenrichtung gedreht, so dass sich sowohl auf der Anodenseite als auch auf der Kathodenseite die Dickengradienten der GDL aufheben, wodurch ein Zellenstapel mit minimierter Dickenvariation und damit dauerhaft hoher Listungsdichte erhalten wird. Drücke, die auf den Zellenstapel wirken, werden gleichmäßig über alle Schichten verteilt, so dass Druckspitzen ausgeschlossen werden.

Das vorstehende Beispiel ist für eine beliebige Anzahl von vereinzelten GDL durchführbar, wobei sich an die jeweils letzte GDL, die in Quermaschinenrichtung bis zur zweiten Längskante vereinzelt werden konnte, eine jeweils erste GDL, die in Quermaschinenrichtung beginnnd von der ersten Längskante vereinzelt werden kann, in einer neuen Reihe in Längsrichtung der Rolle anschließt. Die Drehung der GDL in Quermaschinenrichtung kann dabei entweder direkt nach der Vereinzelung der GDL von der Rollenware erfolgen, also vor einer etwaigen Bevorratung, oder auch erst beim Stapeln der einzelnen Schichten zu einem Zellstapel.

Eine weitere vorteilhafte Weiterbildung ist dadurch gekennzeichnet, dass die Gasdiffusionslagen als Rollenware bereitgestellt und zu GDL vereinzelt werden, wobei zum Vereinzeln der GDL GDL nacheinander von einer Rolle in Quermaschinenrichtung entnommen und nacheinander entnommene GDL jeweils übereinander gestapelt werden, wobei jede zweite der übereinander zu stapelnden oder gestapelten GDL um 180° relativ zur Quermaschinenrichtung gedreht wird und übereinander gestapelte GDL als AGDL oder KGDL übereinander angeordneter Einzelzellen des Zellenstapels verwendet werden. Wie vorstehend bereits dargelegt kann die Drehung der GDL in Quermaschinenrichtung entweder direkt nach der Vereinzelung der GDL von der Rollenware erfolgen, also vor einer etwaigen Bevorratung, oder auch erst beim Stapeln der einzelnen Schichten zu einem Zellstapel. In beiden Ausführungen wird bei Verwendung der vereinzelten GDL und Stapelung derselben (beinhaltend eine Drehung jeder zweiten GDL um 180° in Quermaschinenrichtung) entweder auf Anodenseiten des Zellstapels (verwendung der GDL als AGDL) oder auf Kathodenseiten des Zellstapels (Verwendung der GDL als KGDL) ein Ausgleich der Dickenunterschiede im Zellstapel erzielt, so dass Druckspitzen vermindet oder sogar verhindert werden können.

Gemäß einer vorteilhaften Weiterbildung werden die GDL als Rollenware bereitgestellt und zu GDL vereinzelt, wobei zum Vereinzeln der GDL GDL nacheinander von einer Rolle in Quermaschinenrichtung entnommen und nacheinander entnommene GDL jeweils übereinander gestapelt werden. Dabei werden jedoch über einen Zufallsgenerator GDL ermittelt, die dann um 180 ° relativ zur Quermaschinenrichtung gedreht werden, wobei Drehung oder Nicht-Drehung die gleiche Wahrscheinlichkeit aufweisen. Dies führt dazu, dass die AGDL und die KGDL in zufälliger Abfolge gedreht und somit statistisch gesehen so angeordnet werden können, dass sich der erste Dickengradient und der zweite Dickengradient aufheben bzw. Dickenunterschiede reduziert werden. Auch hierdurch wird ein Zellenstapel mit geringem Dickenunterschied erhalten. Die Schichten liegen plan aufeinander, so dass lokal keine Druckspitzen innerhalb der Schichten auftreten. Aufgrund der endlichen Anzahl an Zellen innerhalb eines Zellenstapels kann die tatsächliche Anzahl von Drehung und Nicht-Drehung ungleich zueinander sein und innerhalb von 45 % bis 55 % liegen. Die Drehung der GDL kann dabei z.B. bei Ablage im Anschluss an das Vereinzeln der GDL von der Rollenware erfolgen, oder auch erst beim Stapeln der Schichten für den Zellstapel.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine GDL-Rollenware,
- Fig. 2: ein Verfahren zur Herstellung eines Zellenstapels gemäß einer ersten Ausführungsform,
- Fig. 3: ein Verfahren zur Herstellung eines Zellenstapels gemäß einer zweiten Ausführungsform,
- Fig. 4: ein Verfahren zur Herstellung eines Zellenstapels gemäß einer dritten Ausführungsform,
- Fig. 5: ein Verfahren zur Herstellung eines Zellenstapels gemäß einer vierten Ausführungsform,
- Fig. 6: ein Verfahren zur Herstellung eines Zellenstapels gemäß einer fünften Ausführungsform,
- Fig. 7: ein Verfahren zur Herstellung eines Zellenstapels gemäß einer sechsten Ausführungsform,
- Fig. 8: ein Verfahren zur Herstellung eines Zellenstapels gemäß einer siebten Ausführungsform,
- Fig. 9: ein Verfahren zur Herstellung eines Zellenstapels gemäß einer achten Ausführungsform,
- Fig. 10: ein Verfahren zur Herstellung eines Zellenstapels gemäß einer neunten Ausführungsform,
- Fig. 11: ein Verfahren zur Herstellung eines Zellenstapels gemäß einer zehnten Ausführungsform,
- Fig. 12: ein Verfahren zur Herstellung eines Zellenstapels gemäß einer elften Ausführungsform,
- Fig. 13: ein Verfahren zur Herstellung eines Zellenstapels gemäß einer zwölften Ausführungsform,
- Fig. 14: ein Verfahren zur Herstellung eines Zellenstapels gemäß einer dreizehnten Ausführungsform, und
- Fig. 15: eine Simulation eines Ergebnisses einer statistischen Drehung für GDL mit einem linearen Gradienten über 500 Zellenstapel mit jeweils 400 GDL.

In den Figuren sind nur die wesentlichen Merkmale der vorliegenden Erfindung dargestellt. Alle übrigen Merkmale sind der Übersichtlichkeit halber weggelassen. Ferner beziffern gleiche Bezugszeichen gleiche Merkmale/Komponenten.

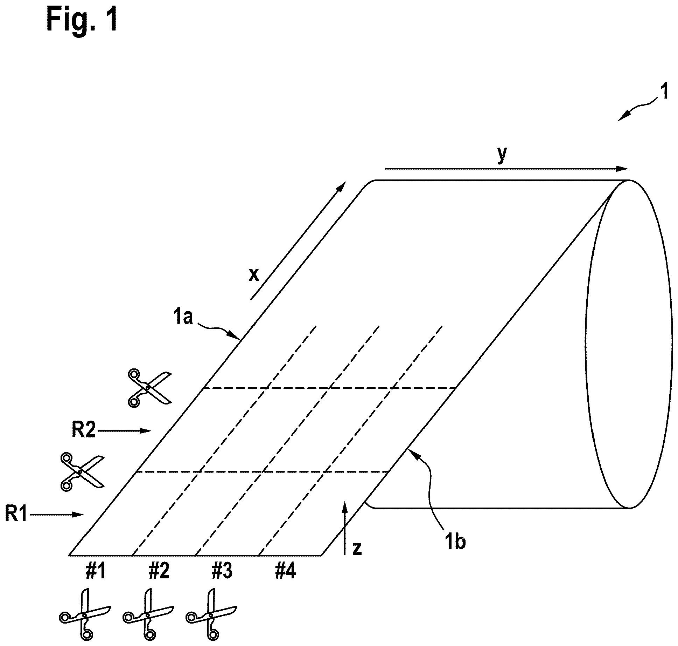

Figur 1 zeigt im Detail eine GDL-Rollenware 1, was bedeutet, dass das Material der GDL mit einer bestimmten Breite und Länge hergestellt und zu einer Rolle 1 aufgerollt wurde. In dieser beispielhaften Ausgestaltung ist angedeutet, dass z.B. in Quermaschinenrichtung y pro in Längsmaschinenrichtung x gesehener Reihe R1, R2 usw., jeweils vier GDL nebeneinander vereinzelt werden können. Die GDL-Rolle 1 weist einen ersten Längsrand 1a und einen zweiten Längsrand 1b auf.

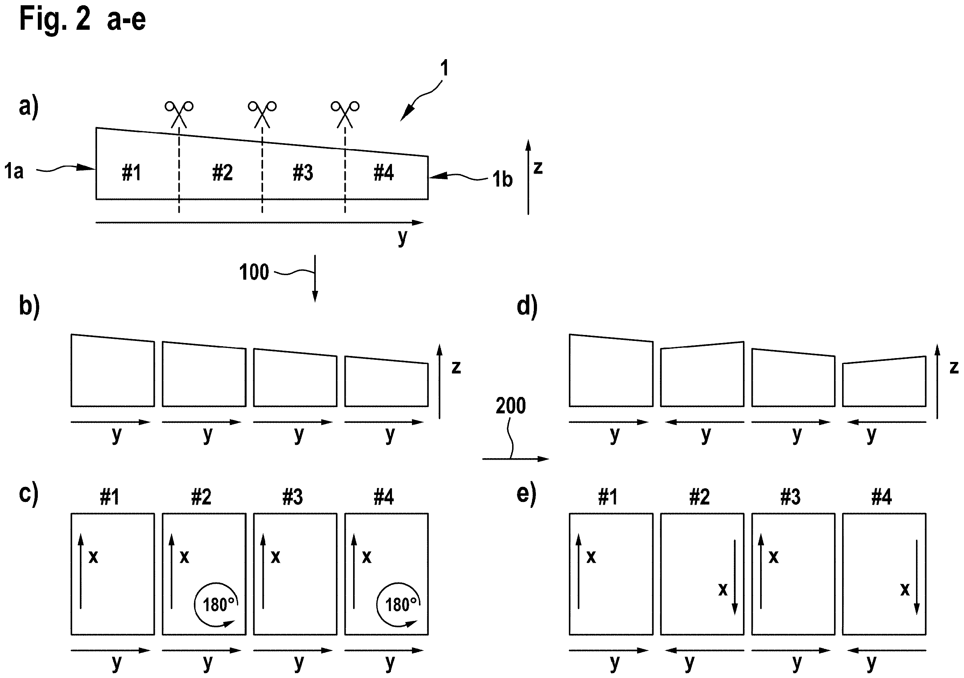

Figur 2a zeigt eine Ansicht des von der Rolle 1 abgerollten GDL-Materials. Hierbei ist zu erkennen, dass das GDL-Material und damit auch alle zu vereinzelnden GDL #1, #2, #3 und #4 in Schichtdickenrichtung z einen Dickengradient aufweisen. In dieser Ausführungsform handelt es sich um einen linearen Dickengradient, also eine Schichtdickenänderung in Schichtdickenrichtung z, die sich über die gesamte Quermaschinenrichtung y durch eine konstante Steigung auszeichnet. Somit hat die Steigung aller in Quermaschinenrichtung y angeordneten GDL #1-#4 dieselbe Steigung und damit dieselbe Schichtdickenreduktion in Quermaschinenrichtung y.

Wird das GDL-Material nun in Verfahrensschritt 100 zu vier GDL #1-#4 vereinzelt, wie in Figur 2b gezeigt, so werden vier separate GDL #1-#4 erhalten, wobei #1 absolut gesehen die größte Schichtdicke und #4 absolut gesehen die geringste Schichtdicke aufweist, jedoch der jeweilige Dickengradient, also die Steigung, mit der die Schichtdicke in Quermaschinenrichtung y abnimmt, in allen vier GDL #1-#4 dieselbe ist. Figur 2b zeigt hierbei die vereinzelten GDL #1-#4 als Schnittansicht, geschnitten entlang der Quermaschinenrichtung y.

Figur 2c zeigt eine Aufsicht auf die vereinzelten GDL #1-#4. Dargestellt sind die GDL #1-#4 aufgespannt in Längsmaschinenrichtung x und Quermaschinenrichtung y. Nun werden in Verfahrensschritt 200 die zweite GDL #2 und die vierte GDL #4 in Quermaschinenrichtung y um 180° gedreht. Dies führt zu der Ansicht der GDL #1-#4 in Figuren 2d und 2e, wobei Figur 2d wiederum eine Seitenansicht der GDL #1-#4, also eine in Quermaschinenrichtung y geschnittene Ansicht analog zu Fig. 2b darstellt und Figur 2e wiederum eine Aufsicht auf die GDL #1-#4, analog zu Figur 2c darstellt.

Insbesondere Figur 2d lässt erkennen, wie nun der Gradientenverlauf in Schichtdickenrichtung z der gedrehten GDL #2 und #4 und der nicht gedrehten GDL #1 und #3 ist.

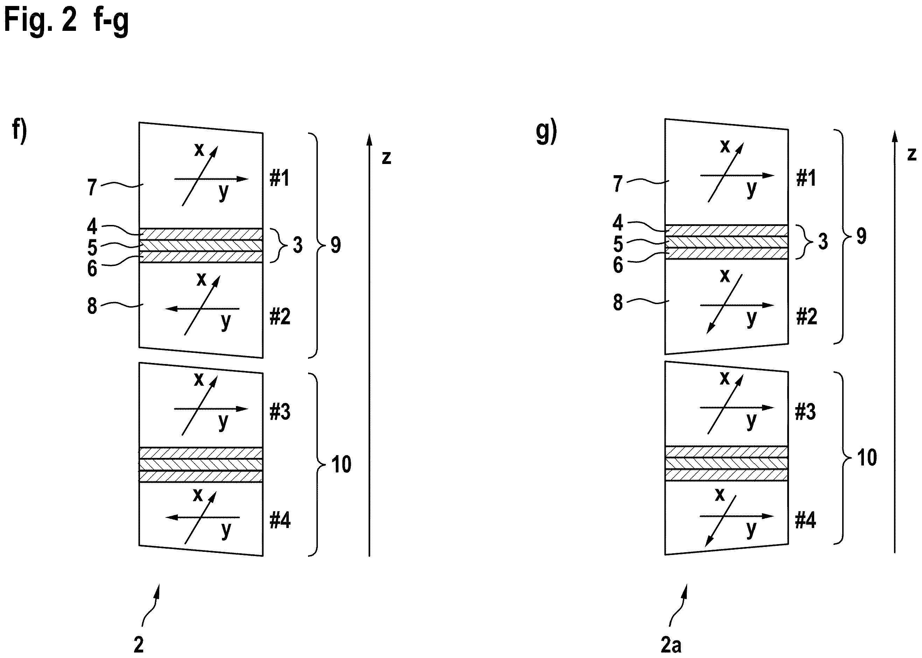

Werden nun die nicht gedrehten GDL #1 und #3 sowie die gedrehten GDL #2 und #4 aus Figuren 2d und 2e für die Herstellung eines Zellenstapels 2 in der Reihenfolge #1, #2, #3, #4 verwendet, so wird eine MEA 3, die eine Anode 4, eine Kathode 6 und eine dazwischenliegende Membran 5 umfasst, zwischen einer AGDL 7, die #1 bzw. #3 entspricht und einer KGDL 8, die #2 bzw. #4 entspricht assembliert. Die jeweiligen Schichten werden dabei in Quermaschinenrichtung y übereinander gestapelt. In Schichtdickenrichtung z gesehen ergibt sich die Anordnung, wie sie in Figur 2f gezeigt ist. Die GDL #1-#4 sind in Quermaschinenrichtung y nacheinander übereinander gestapelt. Es sind zwei Einzelzellen 9, 10 gezeigt, die zum Zellenstapel 2 gestapelt werden können.

Aus Figur 2f ist ersichtlich, dass die 180° Drehung der zweiten GDL #2 und der vierten GDL #4 vorteilhaft für die Assemblierung in den Einzelzellen 9 und 10 ist. Dies bedeutet, dass sich die Dickenunterschiede der GDL #1-#4 nach Assemblierung zu Einzelzellen 9, 10 aufheben. Dies führt dazu, dass auch durch Assemblierung der Einzelzellen 9, 10 sich die Dickenunterschiede im Zellenstapel 2 aufheben.

Mit anderen Worten sind in jeder Einzelzelle 9, 10 die AGDL 7 und die KGDL 8 so zueinander angeordnet, dass der erste Dickengradient der AGDL 7 und der zweite Dickengradient der KGDL 8 gegenläufig sind und sich dadurch aufheben.

Damit ergibt sich über alle Schichten des Zellenstapels 2 eine gleichmäßige Dicken- und damit Druckverteilung, so dass die Leistungsdichte des Zellenstapels 2 dauerhaft sehr hoch ist.

Figur 2g zeigt den Fall, in dem die GDL #1-#4 aus Fig. 2b und 2c, also die GDL im nicht gedrehten Zustand, zu einem Zellenstapel 2a mit zwei Einzelzellen 9, 10 assembliert sind. Hier sieht man, dass sich die Dickenunterschiede weder in der Einzelzelle 9, 10 noch im Zellenstapel 2a aufheben oder minimieren. Vielmehr bestehen deutliche Dickenvariationen aufgrund des ersten Dickengradienten der AGDL 7 und des zweiten Dickengradienten der KGDL 8.

Somit kann sich über alle Schichten des Zellenstapels 2a keine gleichmäßige Druckverteilung ergeben, so dass die Leistungsdichte des Zellenstapels 2a reduziert wird.

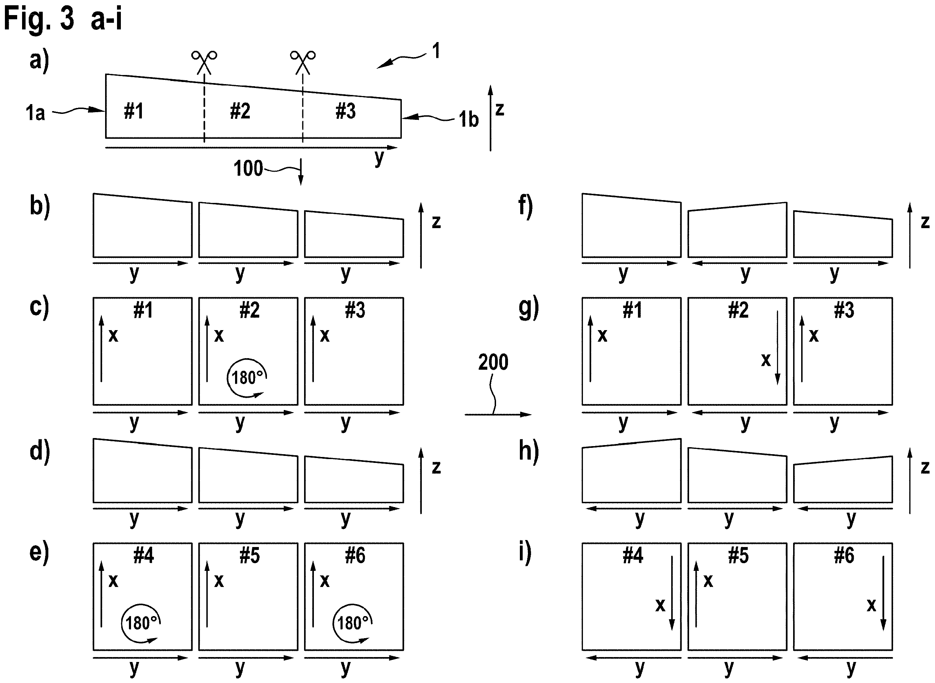

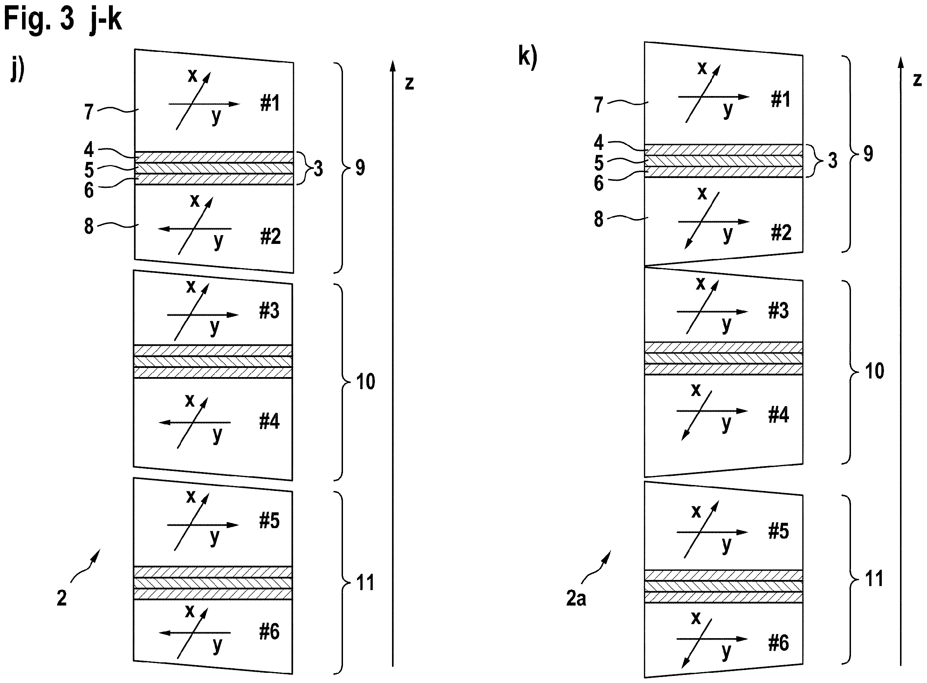

Figur 3 veranschaulicht ein Verfahren zur Herstellung eines Zellstapels gemäß einer zweiten Ausführungsform. Wie bereits die GDL-Rollenware in Figur 2, weist auch die GDL-Rollenware 1 in Quermaschinenrichtung y einen Dickengradient auf, wobei sich die Schichtdicke der GDL-Rollenware 1 kontinuierlich mit konstanter Steigung von einem ersten Längsrand 1a zu einem zweiten Längsrand 1b ändert.

Im Unterschied zu Figur 2 werden pro Reihe R1 und R2 jeweils drei GDL #1, #2 und #3 sowie #4, #5 und #6 vereinzelt. Figuren 3b und 3c zeigen die drei vereinzelten GDL #1-#3 aus der ersten Reihe R1 jeweils in Seitenansicht (Querschnitt in Quermaschinenrichtung y) und in Aufsicht (Aufsicht auf die jeweilige GDL aufgespannt in Längsmaschinenrichtung x und Quermaschinenrichtung y). Figuren 3d und 3f zeigen die drei vereinzelten GDL #4-#6 aus der zweiten Reihe R2 jeweils in Seitenansicht (Querschnitt in Quermaschinenrichtung y) und in Aufsicht (Aufsicht auf die jeweilige GDL aufgespannt in Längsmaschinenrichtung x und Quermaschinenrichtung y).

In Verfahrensschritt 200 wird wiederum jeder zweite GDL (#2, #4 und #6) in Quermaschinenrichtung y um 180° gedreht. Hierdurch ergeben sich die Ansichten der GDL #1-#6 wie in Figuren 3f, 3g, 3h und 3i dargestellt.

Figur 3j zeigt einen Zellenstapel 2 nach Assemblierung von drei Einzelzellen 9, 10 und 11, wobei jede Einzelzelle eine Membranelektrodenanordnung 3 mit einer Anode 4, einer Kathode 6 und einer dazwischenliegenden Membran 5 sowie auf der Anodenseite eine AGDL 7 und auf der Kathodenseite eine KGDL 8 umfasst. Einzelzelle 9 weist als AGDL 7 GDL #1 (nicht gedreht) und als KGDL 8 GDL #2 (gedreht) auf. Einzelzelle 10 weist als AGDL 7 GDL #3 (nicht gedreht) und als KGDL 8 GDL #4 (gedreht) auf. Einzelzelle 11 weist als AGDL 7 GDL #5 (nicht gedreht) und als KGDL 8 GDL #6 (gedreht) auf.

Jede Einzelzelle 9 bis 11 weist somit jeweils eine GDL auf, die in Quermaschinenrichtung y um 180° gedreht wurde, so dass der erste Dickengradient der AGDL einer Einzelzelle und der zweite Dickengradient der KGDL in entgegengesetzte Richtungen verlaufen, so dass sich die Dickenunterschiede je Einzelzelle aufheben.

Auch ist aus Figur 3j zu erkennen, dass sich die Dickenunterschiede bzw. Dickenvariationen in Quermaschinenrichtung auch im Zellenstapel 2 aufheben, so dass auf alle Schichten des Zellenstapels 2 derselbe Druck wirkt und Druckspitzen vermieden werden können. Somit ist auch die Leistungsdichte des Zellenstapels 2 auf Dauer hoch.

Figur 3k zeigt den Fall, in dem die GDL #1-#6 aus Fig. 3b, 3c, 3d und 3e, also die GDL im nicht gedrehten Zustand, zu einem Zellenstapel 2a mit drei Einzelzellen 9, 10 und 11 assembliert sind. Hier sieht man, dass sich die Dickenunterschiede weder in der Einzelzelle 9, 10 oder 11 noch im Zellenstapel 2a aufheben oder minimieren. Vielmehr bestehen deutliche Dickenvariationen aufgrund des ersten Dickengradienten der AGDL 7 und des zweiten Dickengradienten der KGDL 8.

Somit kann sich über alle Schichten des Zellenstapels 2a keine gleichmäßige Druckverteilung ergeben, so dass die Leistungsdichte des Zellenstapels 2a reduziert wird.

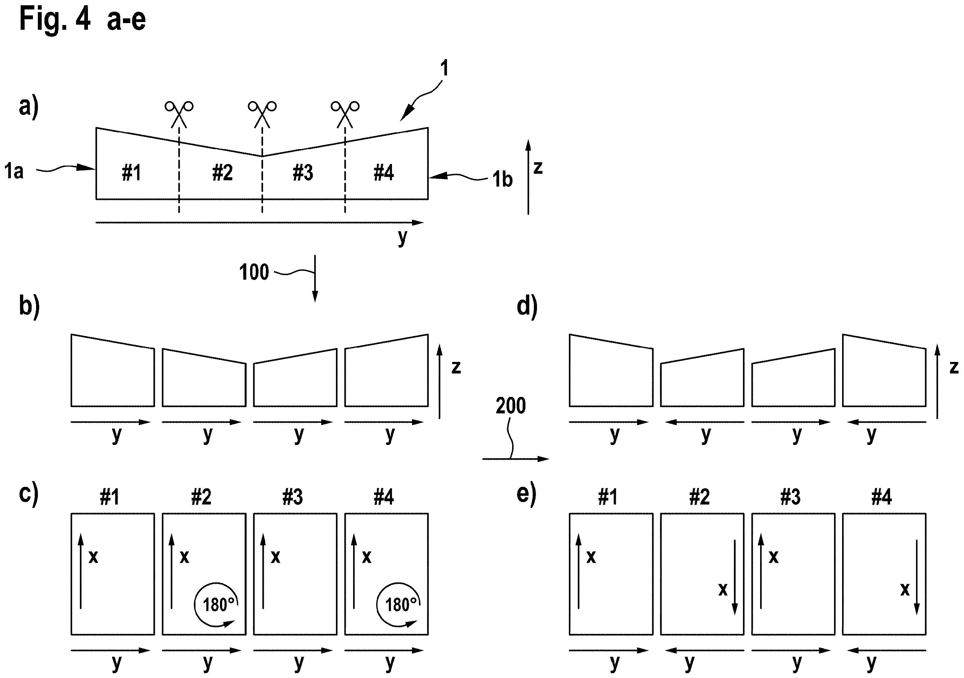

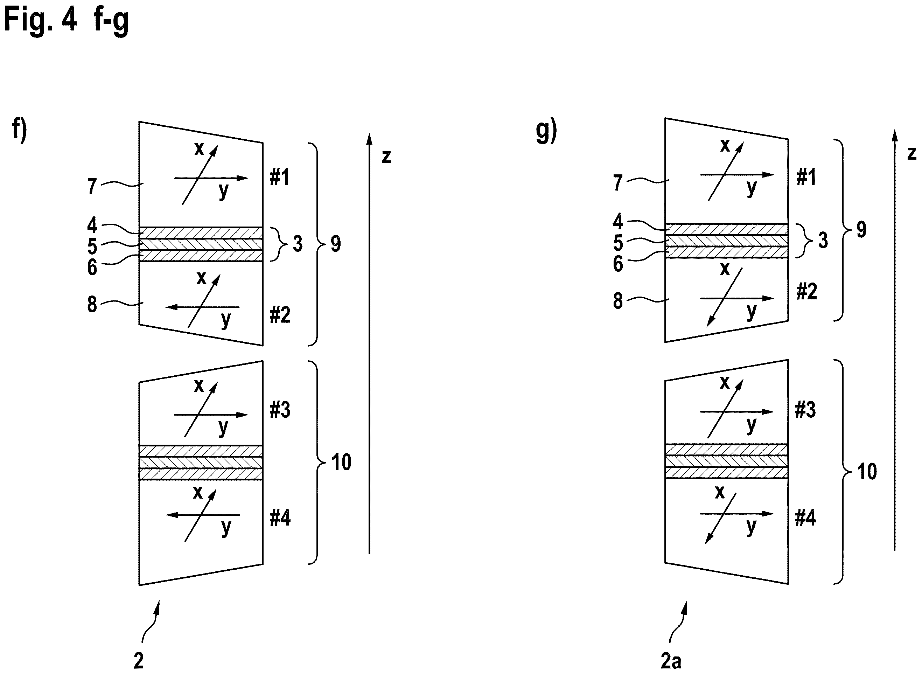

Figur 4 veranschaulicht ein Verfahren zur Herstellung eines Zellenstapels gemäß einer dritten Ausführungsform.

In dieser Ausführungsform hat die GDL-Rollenware 1 in Quermaschinenrichtung y eine konkave Form. Entlang der Quermaschinenrichtung weist die GDL-Rollenware 1 somit von einem Längsrand 1a zum anderen Längsrand 1b zwei Dickengradienten auf, die in entgegengesetzter Richtung verlaufen. Von der ersten GDL #1 zur zweiten GDL #2 nimmt die Steigung in Schichtdickenrichtung z ab und von der dritten GDL #3 zur vierten GDL #4 nimmt die Steigung in Schichtdickenrichtung z zu. Wird nun diese GDL-Rollenware 1 in der Form zu GDL vereinzelt, so dass pro Reihe vier GDL #1, #2, #3 und #4 vereinzelt werden, so ergibt sich deren Schnittmuster wie in Figuren 4b und 4c dargestellt, wobei Figur 4b analog Figuren 2b und 3b wiederum eine Schnittansicht in Quermaschinenrichtung y zeigt und Figur 4c analog zu Figuren 2c und 3c eine Aufsicht auf die in Längsmaschinenrichtung x und Quermaschinenrichtung y aufgespannten GDL #1-#4 zeigt.

Wie in Figuren 2 und 3 werden auch GDL #2 und GDL #4 in Verfahrensschritt 200 in Quermaschinenrichtung um 180° gedreht, woraus sich die Schnittmuster der GDL #1-#4 wie in Figuren 4d und 4e dargestellt ergeben.

Werden nun die GDL #1-#4 nacheinander für Einzelzellen 9, 10 als AGDL 7 und KGDL 8 verwendet, also GDL #1 als AGDL 7 von Einzelzelle 9, GDL #2 als KGDL 8 von Einzelzelle 9 sowie GDL #3 als AGDL 7 von Einzelzelle 10, GDL #4 als KGDL 8 von Einzelzelle 10, so werden bei Assemblierung zu Einzelzellen 9, 10 die in den GDL #1-#4 bestehenden Dickenunterschiede bzw. Dickenvariationen wie in Figur 4f gezeigt, aufgehoben. Aufgrund des Dickenausgleichs in den Einzelzellen 9, 10 wird auch ein aus Einzelzellen 9 und 10 bestehender Zellenstapel 2 insgesamt einen ausgeglichenen Dickenunterschied aufweisen.

Figur 4g zeigt hingegen, dass sofern keine der GDL #1-#4 um 180° gedreht wurde, auch in Einzelzellen 9 und 10 kein Dickenausgleich stattfindet. Vielmehr verstärken sich der erste Dickengradient der AGDL 7 und der zweite Dickengradient der KGDL 8 (siehe Zellenstapel 2a), so dass deutliche Druckinhomogenitäten in den Schichten der Einzelzellen vorherrschen.

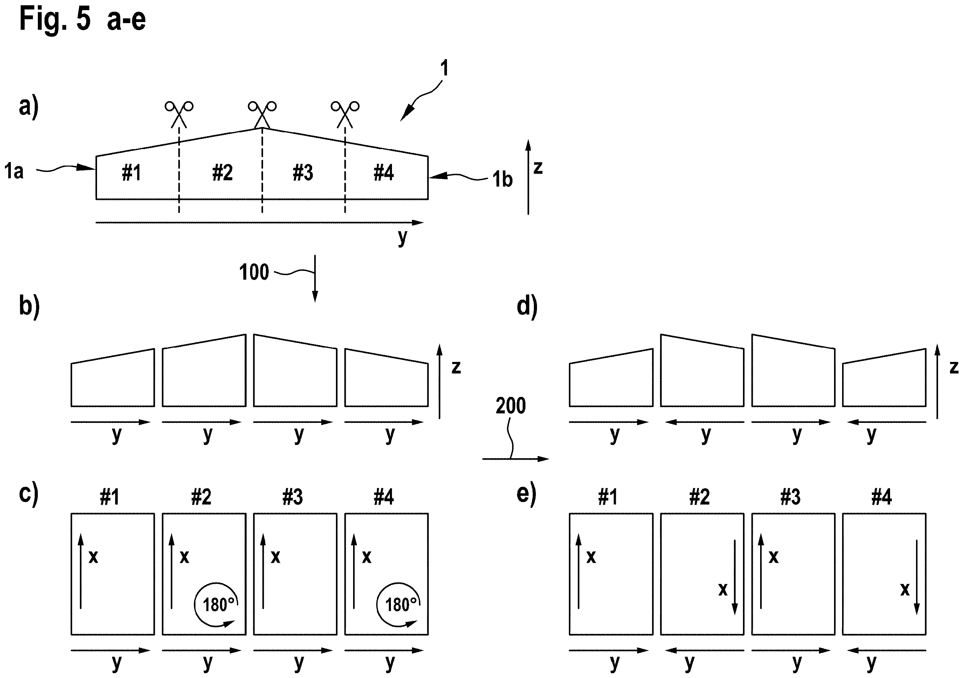

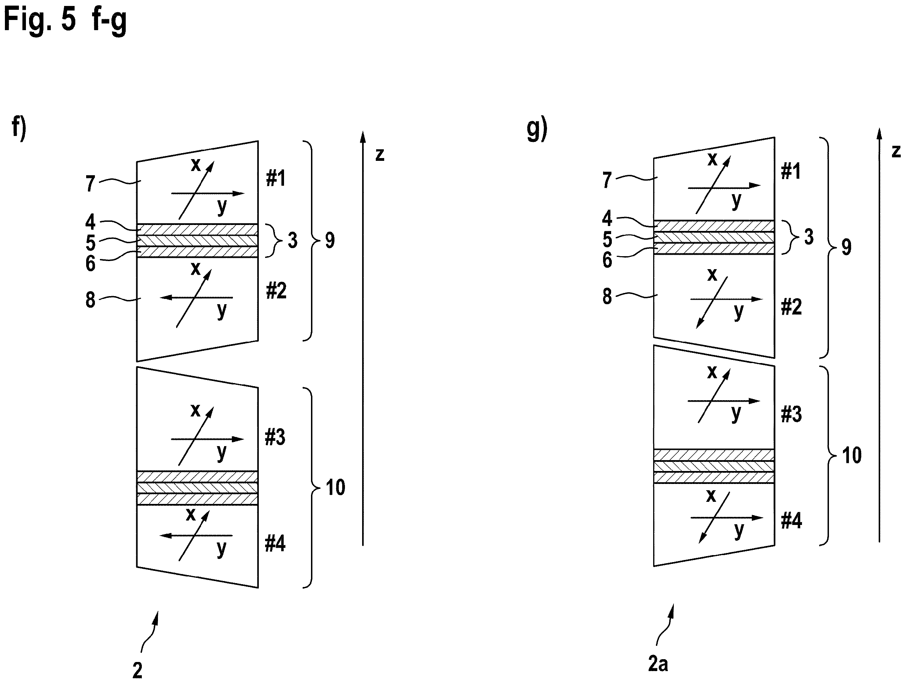

Figur 5 veranschaulicht ein Verfahren zur Herstellung eines Zellenstapels gemäß einer vierten Ausführungsform.

In dieser Ausführungsform hat die GDL-Rollenware 1 in Quermaschinenrichtung y eine konvexe Form. Entlang der Quermaschinenrichtung weist die GDL-Rollenware 1 somit von einem Längsrand 1a zum anderen Längsrand 1b zwei Dickengradienten auf, die in entgegengesetzter Richtung verlaufen, jedoch im Unterschied zu Figur 4 von der ersten GDL #1 zur zweiten GDL #2 mit zunehmender Steigung in Schichtdickenrichtung z und von der dritten GDL #3 zur vierten GDL #4 mit abnehmender Steigung in Schichtdickenrichtung z. Wird nun diese GDL-Rollenware 1 in der Form zu GDL vereinzelt, dass pro Reihe vier GDL #1, #2, #3 und #4 vereinzelt werden, so ergibt sich deren Schnittmuster wie in Figuren 5b und 5c dargestellt, wobei Figur 5b analog Figuren 2b, 3b und 4b wiederum eine Schnittansicht in Quermaschinenrichtung y zeigt und Figur 5c analog zu Figuren 2c, 3c, und 4c eine Aufsicht auf die in Längsmaschinenrichtung x und Quermaschinenrichtung y aufgespannten GDL #1-#4 zeigt.

Wie in Figuren 2 und 4 werden auch GDL #2 und GDL #4 in Verfahrensschritt 200 in Quermaschinenrichtung um 180° gedreht, woraus sich die Schnittmuster der GDL #1-#4 wie in Figuren 5d und 5e dargestellt ergeben.

Werden nun die GDL #1-#4 nacheinander für Einzelzellen 9, 10 als AGDL 7 und KGDL 8 verwendet, also GDL #1 als AGDL 7 von Einzelzelle 9, GDL #2 als KGDL 8 von Einzelzelle 9 sowie GDL #3 als AGDL 7 von Einzelzelle 10, GDL #4 als KGDL 8 von Einzelzelle 10, so werden bei Assemblierung zu Einzelzellen 9, 10 die in den GDL #1-#4 bestehenden Dickenunterschiede bzw. Dickenvariationen wie in Figur 5f gezeigt, aufgehoben. Aufgrund des Dickenausgleichs in den Einzelzellen 9, 10 wird auch ein aus Einzelzellen 9 und 10 bestehender Zellenstapel 2 insgesamt einen ausgeglichenen Dickenunterschied aufweisen.

Figur 5g zeigt hingegen, dass sofern keine der GDL #1-#4 um 180° gedreht wurde (siehe Zellenstapel 2a), auch in Einzelzellen 9 und 10 kein Dickenausgleich stattfindet. Vielmehr verstärken sich der erste Dickengradient der AGDL 7 und der zweite Dickengradient der KGDL 8, so dass deutliche Druckinhomogenitäten in den Schichten der Einzelzellen 9, 10 vorherrschen.

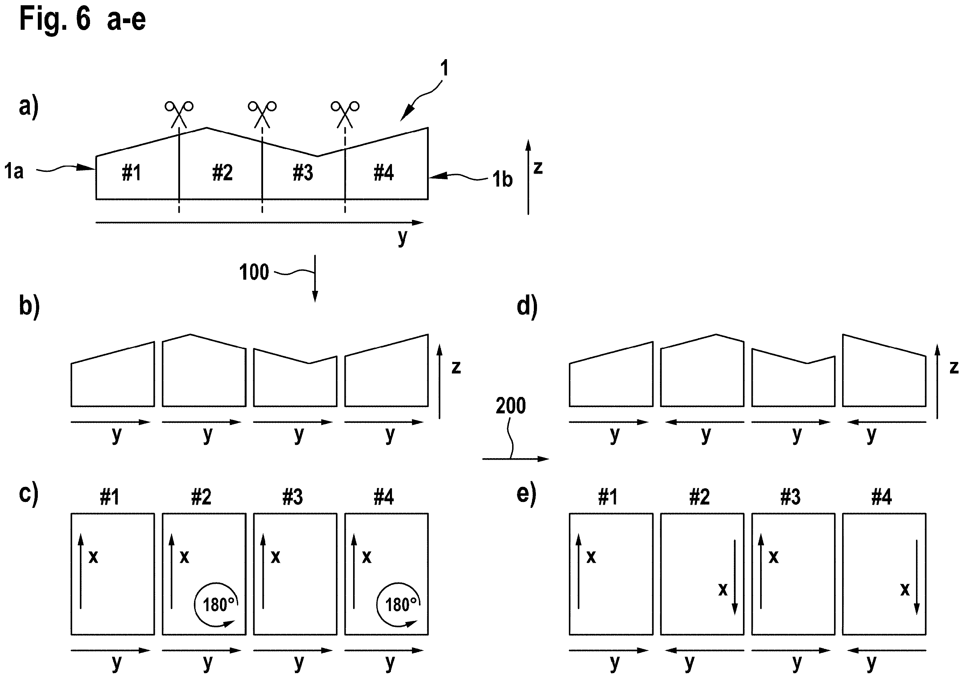

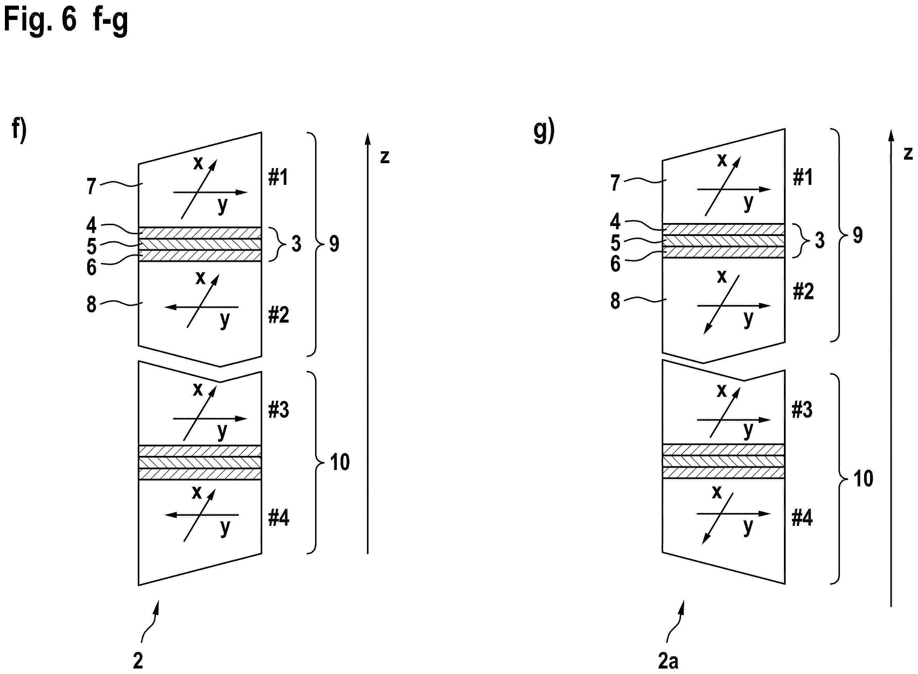

Figur 6 veranschaulicht ein Verfahren zur Herstellung eines Zellenstapels gemäß einer fünften Ausführungsform.

In dieser Ausführungsform hat die GDL-Rollenware 1 in Quermaschinenrichtung y eine wellenartige Form. Entlang der Quermaschinenrichtung y weist die GDL-Rollenware 1 somit von einem Längsrand 1a zum anderen Längsrand 1b drei Dickengradienten auf, wobei der erste Dickengradient und der dritte Dickengradient in dieselbe Richtung verlaufen und ansteigen und ein dazwischen liegender Dickengradient in eine absteigende Richtung verläuft.

Die erste und die vierte GDL #1, #4 haben eine zunehmende Steigung in Schichtdickenrichtung z und die zweite und die dritte GDL #2, #3 haben jeweils eine zunehmende und eine abnehmende Steigung in Schichtdickenrichtung z. Wird nun diese GDL-Rollenware 1 in der Form zu GDL vereinzelt, dass pro Reihe vier GDL #1, #2, #3 und #4 vereinzelt werden, so ergibt sich deren Schnittmuster wie in Figuren 6b und 6c dargestellt, wobei Figur 6b analog Figuren 2b, 3b, 4b und 5b wiederum eine Schnittansicht in Quermaschinenrichtung y zeigt und Figur 6c analog zu Figuren 2c, 3c, 4c und 5c eine Aufsicht auf die in Längsmaschinenrichtung x und Quermaschinenrichtung y aufgespannten GDL #1-#4 zeigt.

Wie in den vorhergehenden Figuren werden auch hier GDL #2 und GDL #4 in Verfahrensschritt 200 in Quermaschinenrichtung um 180° gedreht, woraus sich die Schnittmuster der GDL #1-#4 wie in Figuren 6d und 6e dargestellt ergeben.

Werden nun die GDL #1-#4 nacheinander für Einzelzellen 9, 10 als AGDL 7 und KGDL 8 verwendet, die zu Zellenstapel 2 assembliert werden, also GDL #1 als AGDL 7 von Einzelzelle 9, GDL #2 als KGDL 8 von Einzelzelle 9 sowie GDL #3 als AGDL 7 von Einzelzelle 10, GDL #4 als KGDL 8 von Einzelzelle 10, so werden bei Assemblierung der Einzelzellen 9, 10 zu Zellenstapel 2 die in den GDL #1-#4 bestehenden Dickenunterschiede bzw. Dickenvariationen wie in Figur 6f gezeigt, aufgehoben, wobei sich jedoch innerhalb der Einzelzellen 9, 10 kein vollständiger Ausgleich der Dickenunterschiede zwischen AGDL 7 und KGDL 8 ergibt.

Figur 6g zeigt hingegen, dass sofern keine der GDL #1-#4 um 180° gedreht wurde, in dem aus Einzelzellen 9, 10 assemblierten Zellenstapel 2a kein Dickenausgleich stattfindet. Vielmehr verstärken sich der erste Dickengradient der AGDL 7 und der zweite Dickengradient der KGDL 8, so dass deutliche Druckinhomogenitäten in den Schichten der Einzelzellen 9, 10 vorherrschen.

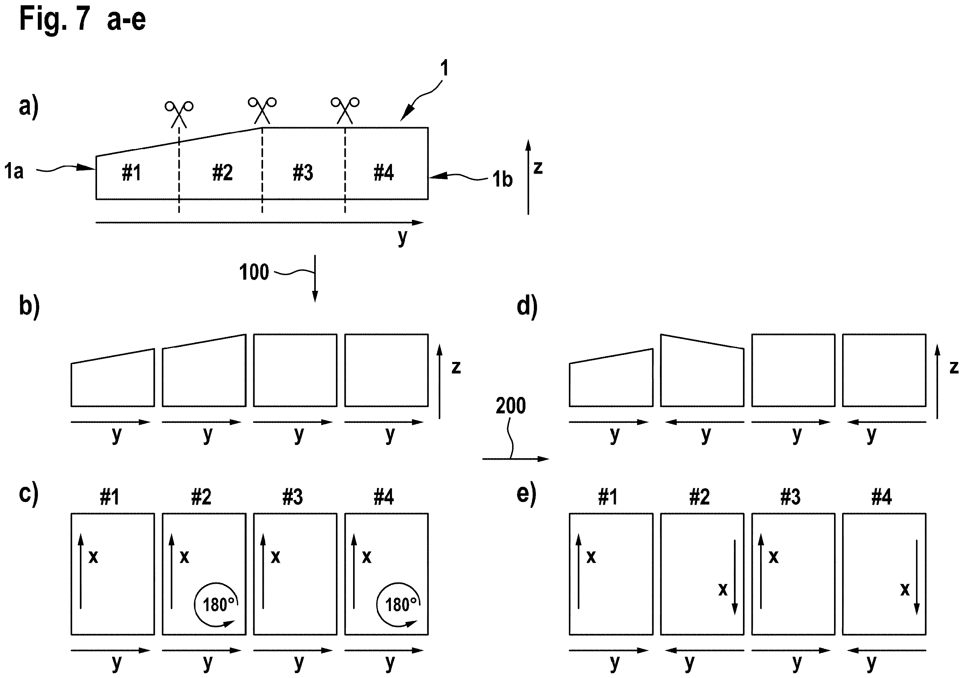

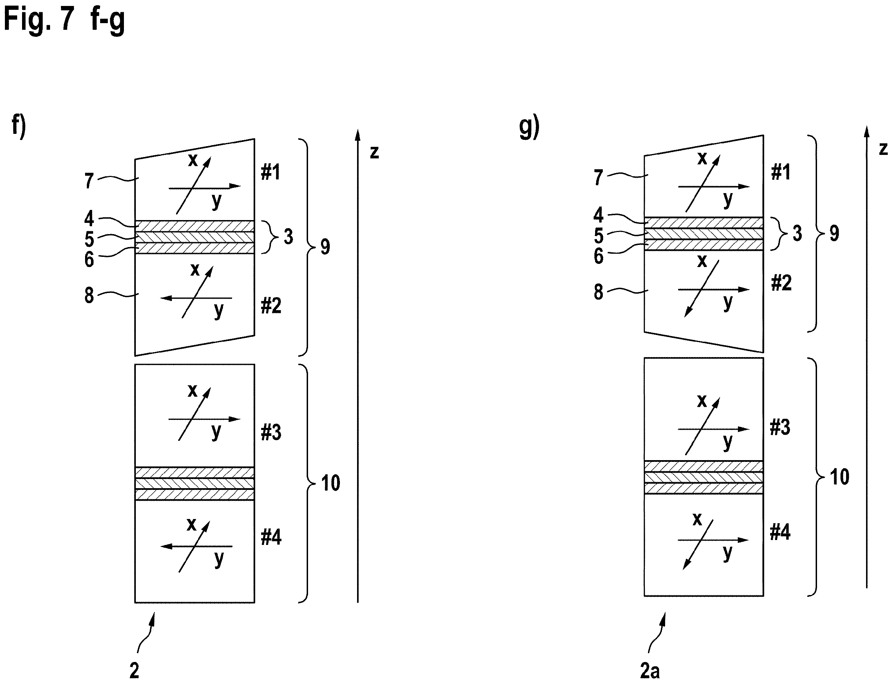

Figur 7 veranschaulicht ein Verfahren zur Herstellung eines Zellenstapels gemäß einer sechsten Ausführungsform.

In dieser Ausführungsform hat die GDL-Rollenware 1 in Quermaschinenrichtung y einen vom ersten Längsrand 1a zum zweiten Längsrand 1b ansteigenden Dickengradienten, und zwar so, dass über die erste und die zweite GDL #1 und #2 eine ansteigende Steigung in Quermaschinenrichtung y zu verzeichnen ist, während die dritte und vierte GDL #3, #4 eine konstante Schichtdicke ohne Dickengradient aufweisen.

Wird nun diese GDL-Rollenware 1 in der Form zu GDL vereinzelt, dass pro Reihe vier GDL #1, #2, #3 und #4 vereinzelt werden, so ergibt sich deren Schnittmuster wie in Figuren 7b und 7c dargestellt, wobei Figur 7b analog Figuren 2b, 3b, 4b, 5b und 6b wiederum eine Schnittansicht in Quermaschinenrichtung y zeigt und Figur 7c analog zu Figuren 2c, 3c, 4c, 5c und 6c eine Aufsicht auf die in Längsmaschinenrichtung x und Quermaschinenrichtung y aufgespannten GDL #1-#4 zeigt.

Wie in den vorhergehenden Figuren werden auch hier GDL #2 und GDL #4 in Verfahrensschritt 200 in Quermaschinenrichtung y um 180° gedreht, woraus sich die Schnittmuster der GDL #1-#4 wie in Figuren 7d und 7e dargestellt ergeben.

Werden nun die GDL #1-#4 nacheinander für Einzelzellen 9, 10 als AGDL 7 und KGDL 8 verwendet, die zu Zellenstapel 2 assembliert werden, also GDL #1 als AGDL 7 von Einzelzelle 9, GDL #2 als KGDL 8 von Einzelzelle 9 sowie GDL #3 als AGDL 7 von Einzelzelle 10, GDL #4 als KGDL 8 von Einzelzelle 10, so werden bei Assemblierung zu Einzelzellen 9, 10 in den GDL #1-#4 bestehende Dickenunterschiede bzw. Dickenvariationen wie in Figur 7f gezeigt, in den Einzelzellen 9, 10 aufgehoben, sowie sich innerhalb des Zellenstapels 2 ein vollständiger Ausgleich der Dickenunterschiede zwischen den jeweiligen AGDL 7 und jeweiligen KGDL 8 ergibt. Die Einzelzelle 10 weist aufgrund der gleichmäßigen Dicke der GDL #3 und #4 eine insgesamt homogene Dickenverteilung auf und trägt somit auch zur Homogenität des Zellenstapels bei.

Figur 7g zeigt hingegen, dass sofern keine der GDL #1-#4 um 180° gedreht wurde, in der Einzelzelle 9 kein Dickenausgleich stattfindet. Vielmehr verstärken sich der erste Dickengradient der AGDL 7 und der zweite Dickengradient der KGDL 8, so dass deutliche Druckinhomogenitäten in der Schicht der Einzelzellen 9 vorherrschen. Die Einzelzelle 10 weist aufgrund der gleichmäßigen Dicke der GDL #3 und #4 eine insgesamt homogene Dickenverteilung auf und trägt somit auch nicht zur Inhomogenität des Zellenstapels bei.

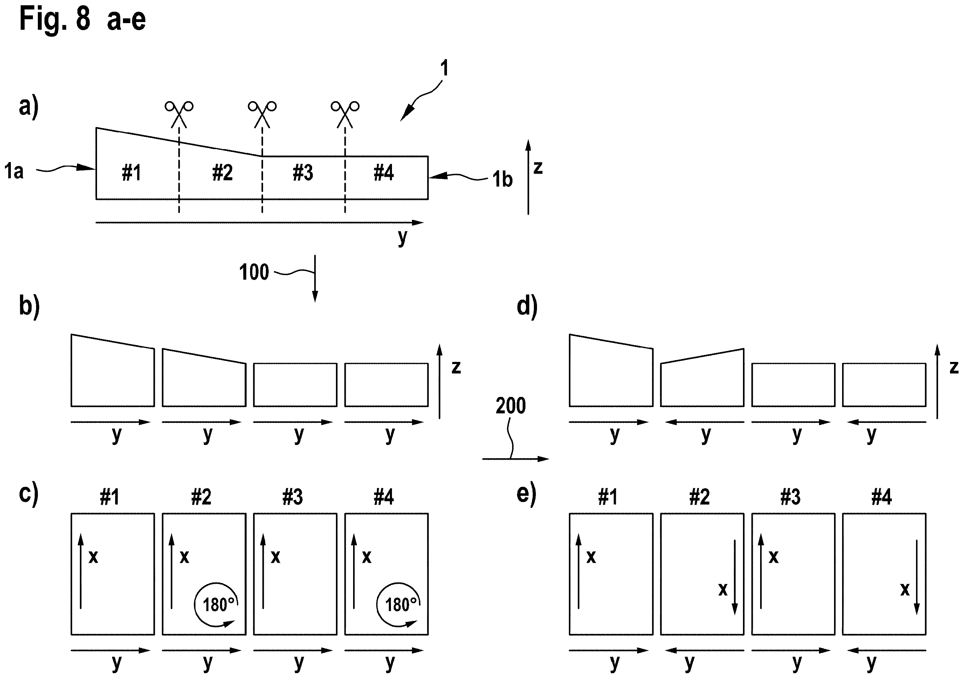

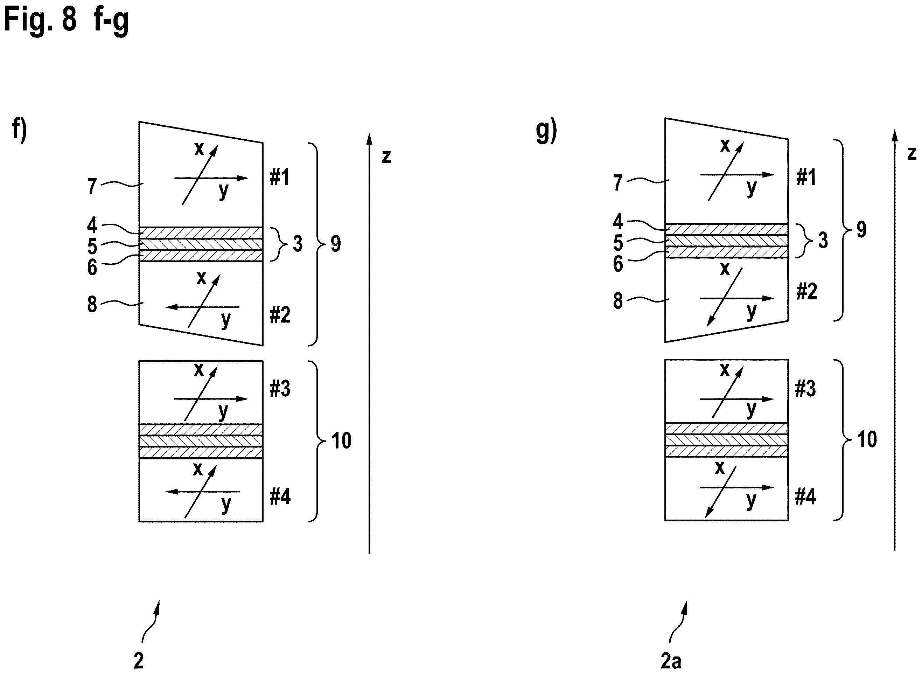

Figur 8 veranschaulicht ein Verfahren zur Herstellung eines Zellenstapels gemäß einer siebten Ausführungsform.

In dieser Ausführungsform hat die GDL-Rollenware 1 in Quermaschinenrichtung y einen vom ersten Längsrand 1 zum zweiten Längsrand 1b abnehmenden Dickengradienten, und zwar so, dass über die erste und die zweite GDL #1 und #2 eine abnehmende Steigung zu verzeichnen ist, während die dritte und vierte GDL #3, #4 eine konstante Schichtdicke ohne Dickengradient mit geringerer Schichtdicke aufweisen.

Wird nun diese GDL-Rollenware 1 in der Form zu GDL vereinzelt, dass pro Reihe vier GDL #1, #2, #3 und #4 vereinzelt werden, so ergibt sich deren Schnittmuster wie in Figuren 8b und 8c dargestellt, wobei Figur 8b analog zu Figuren 2b, 3b, 4b, 5b, 6b und 7b wiederum eine Schnittansicht in Quermaschinenrichtung y zeigt und Figur 8c analog zu Figuren 2c, 3c, 4c, 5c, 6c und 7c eine Aufsicht auf die in Längsmaschinenrichtung x und Quermaschinenrichtung y aufgespannten GDL #1-#4 zeigt.

Wie in den vorhergehenden Figuren werden auch hier GDL #2 und GDL #4 in Verfahrensschritt 200 in Quermaschinenrichtung um 180° gedreht, woraus sich die Schnittmuster der GDL #1-#4 wie in Figuren 8d und 8e dargestellt ergeben.

Werden nun die GDL #1-#4 nacheinander für Einzelzellen 9, 10 als AGDL 7 und KGDL 8 verwendet, die zu Zellenstapel 2 assembliert werden, also GDL #1 als AGDL 7 von Einzelzelle 9, GDL #2 als KGDL 8 von Einzelzelle 9 sowie GDL #3 als AGDL 7 von Einzelzelle 10, GDL #4 als KGDL 8 von Einzelzelle 10, so werden bei Assemblierung zu Einzelzellen 9, 10 in den GDL #1-#4 bestehende Dickenunterschiede bzw. Dickenvariationen wie in Figur 8f gezeigt, in den Einzelzellen 9, 10 aufgehoben, sowie sich innerhalb des Zellenstapels 2 ein vollständiger Ausgleich der Dickenunterschiede zwischen den jeweiligen AGDL 7 und jeweiligen KGDL 8 ergibt. Die Einzelzelle 10 weist aufgrund der gleichmäßigen Dicke der GDL #3 und #4 eine insgesamt homogene Dickenverteilung auf und trägt somit auch zur Homogenität des Zellenstapels bei.

Figur 8g zeigt, dass sofern keine der GDL #1-#4 um 180° gedreht wurde, in der Einzelzellen 9 kein Dickenausgleich stattfindet. Vielmehr verstärken sich der erste Dickengradient der AGDL 7 und der zweite Dickengradient der KGDL 8, so dass deutliche Druckinhomogenitäten in der Schichtn der Einzelzelle 9 vorherrschen. Die Einzelzelle 10 weist aufgrund der gleichmäßigen Dicke der GDL #3 und #4 eine insgesamt homogene Dickenverteilung auf und trägt somit auch nicht zur Inhomogenität des Zellenstapels 2a bei.

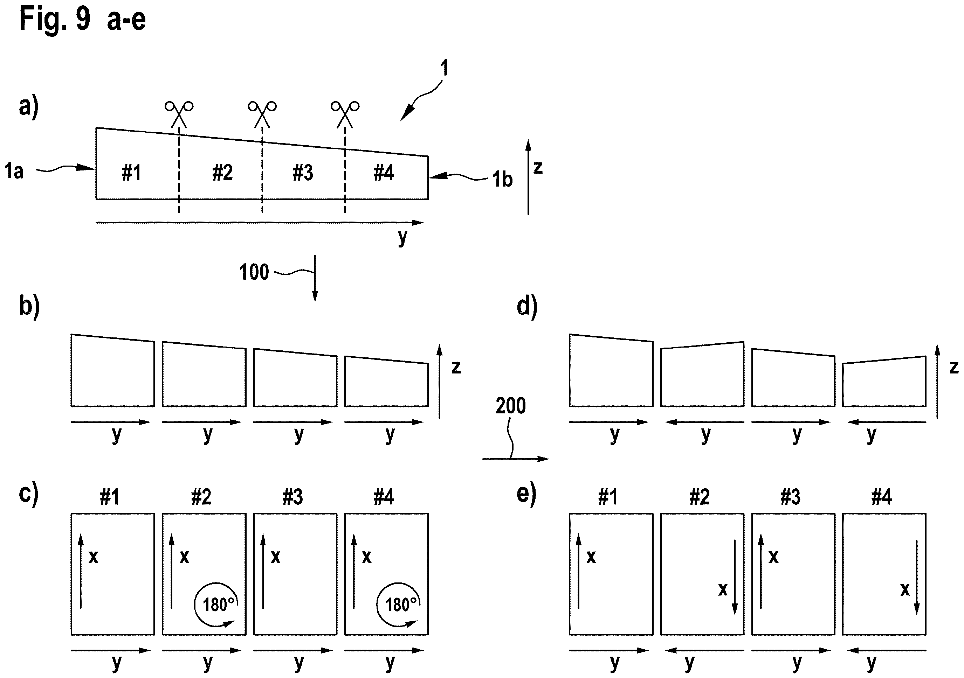

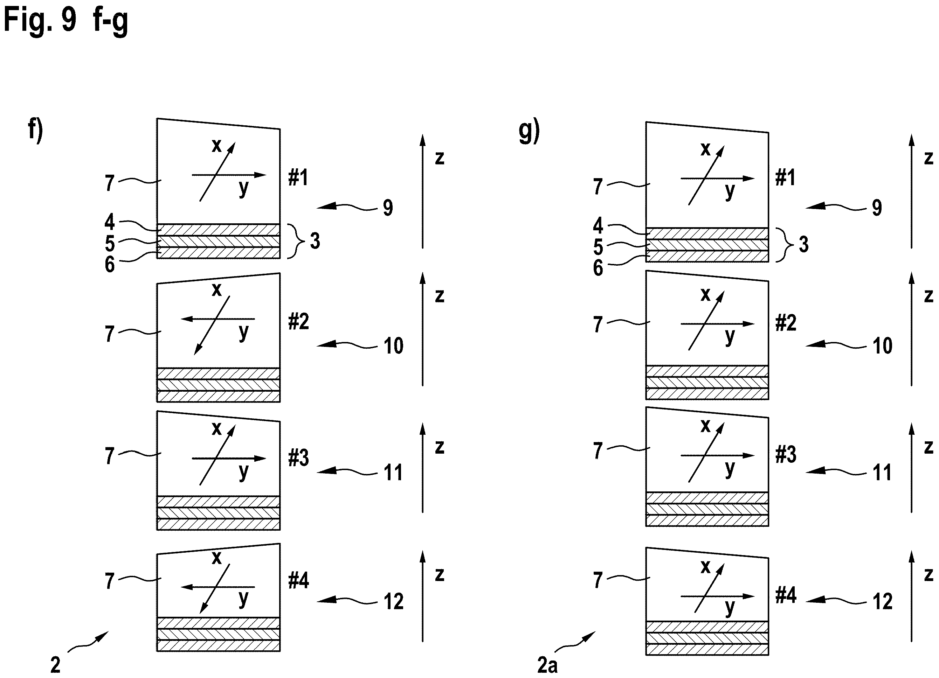

Figur 9 veranschaulicht ein Verfahren zur Herstellung eines Zellenstapels gemäß einer achten Ausführungsform.

Diese Ausführungsform ist ähnlich derjenigen aus Figur 2, mit dem Unterschied, dass die zu GDL #1-#4 vereinzelten GDL beispielhaft nur für die Anodenseite, also ausschließlich als AGDL 7 verwendet werden. Somit wird GDL #1 als AGDL 7 in der ersten Einzelzelle 9, GDL #2 als AGDL 7 in der zweiten Einzelzelle 10, GDL #3 als AGDL 7 in der dritten Einzelzelle 11 und GDL #4 als AGDL 7 in der vierten Einzelzelle 12 eingesetzt.

Durch die Drehung der zweiten und der vierten GDL #2, #4 in Quermaschinenrichtung y wird nach Assemblierung des Zellstapels 2 (zur Vereinfachung sind die KGDL 8 weggelassen), wie in Figur 9f gezeigt, über den gesamten Zellenstapel 2 hinweg auf der Anodenseite durch die entsprechende Ausrichtung der AGDL 7 ein Ausgleich des Dickenunterschieds bzw. der Dickenvariation erreicht. Der Gesamtdickengradient wird somit vermindert oder sogar ausgeglichen. Die AGDL 7 werden also so im Zellenstapel 2 angeordnet, dass sich ihre Dickengradienten aufheben, wodurch eine sehr homogene Druckverteilung über alle Schichten des Zellstapels 2 erzielt werden kann, und sich der Zellstapel 2 durch eine dauerhaft hohe Leistungsdichte auszeichnet.

Im Gegensatz dazu ergibt sich im Zellenstapel 2a (siehe Fig. 9g) keine homogene Druckverteilung über alle Schichten. Hier wurden die zweite uund die vierte GDL #2, #4 in Quermaschinenrichtung y nicht gedreht.

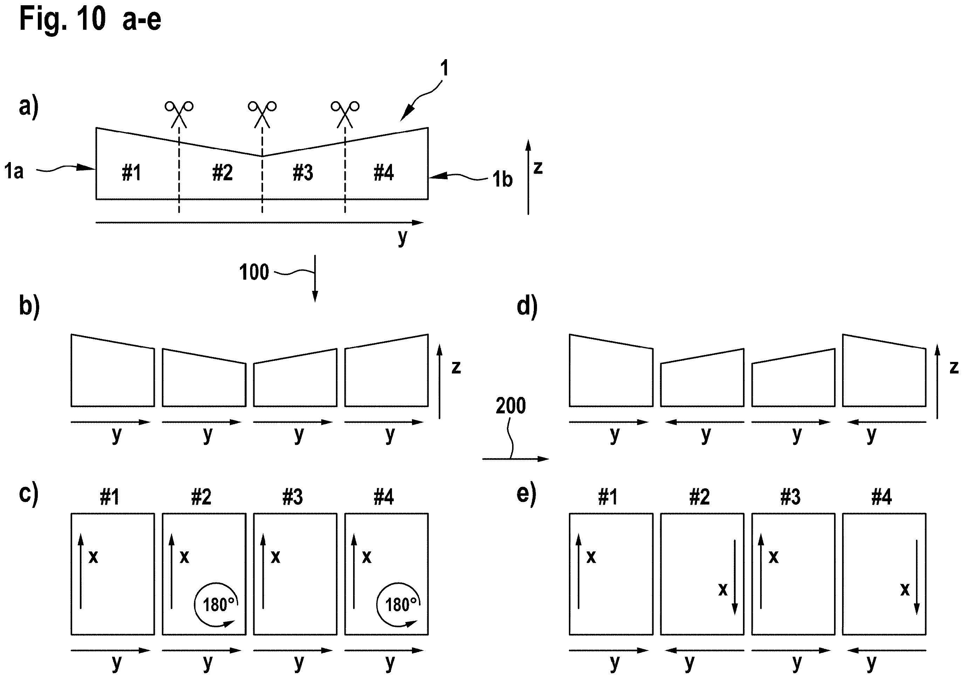

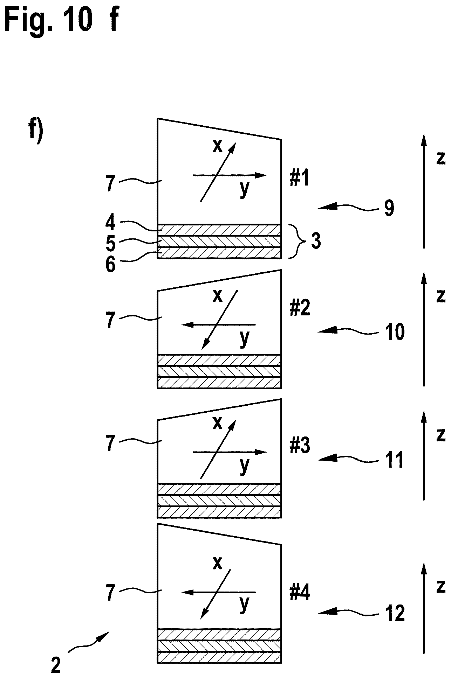

Figur 10 veranschaulicht ein Verfahren zur Herstellung eines Zellenstapels gemäß einer neunten Ausführungsform.

Diese Ausführungsform ist ähnlich derjenigen aus Figur 4 (konkave Ausgestaltung der GDL-Rollenware 1 in Schichtdickenrichtung z), mit dem Unterschied, dass die zu GDL #1-#4 vereinzelten GDL beispielhaft wiederum nur für die Anodenseite, also ausschließlich als AGDL 7 verwendet werden. Somit wird GDL #1 als AGDL 7 in der ersten Einzelzelle 9, in der zweiten Einzelzelle 10 in der dritten Einzelzelle 11 und in der vierten Einzelzelle 12 eingesetzt.

Durch die Drehung der zweiten und der vierten GDL #2, #4 in Quermaschinenrichtung y wird nach Assemblierung des Zellstapels 2 (zur Vereinfachung sind die KGDL 8 erneut weggelassen), wie in Figur 10f gezeigt, über den gesamten Zellenstapel 2 hinweg auf der Anodenseite durch die entsprechende Ausrichtung der AGDL 7 eine deutliche Verminderung des Dickenunterschieds bzw. der Dickenvariation erreicht. Die AGDL 7 werden also so im Zellenstapel 2 angeordnet, dass sich ihre Dickengradienten in Summe reduzieren, also Dickenvariationen vermindert werden, wodurch eine sehr homogene Druckverteilung über alle Schichten des Zellstapels 2 erzielt werden kann, und sich der Zellstapel 2 durch eine dauerhaft hohe Leistungsdichte auszeichnet.

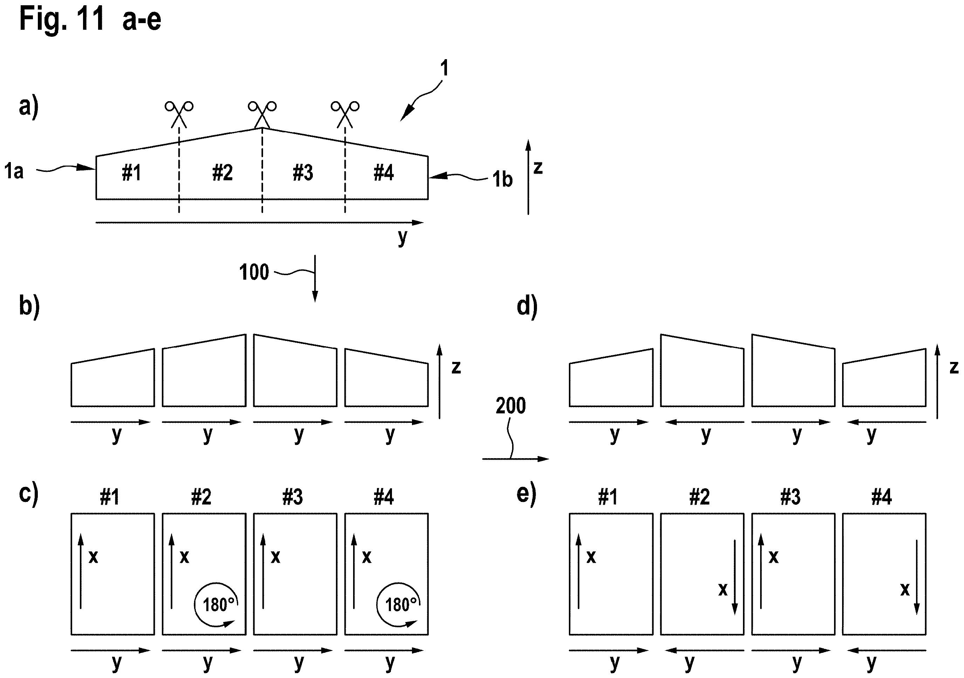

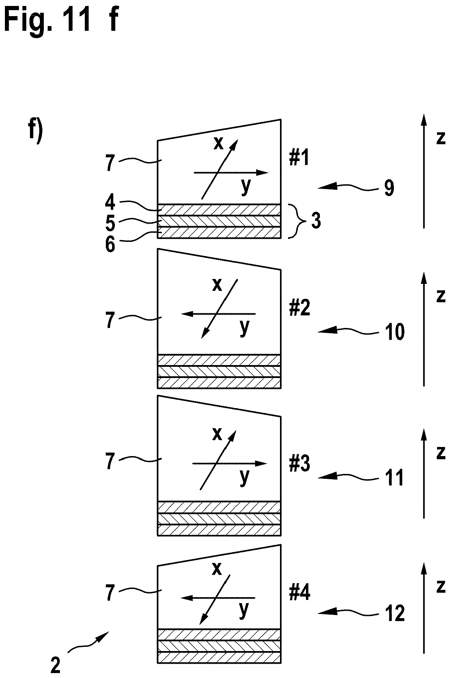

Figur 11 veranschaulicht ein Verfahren zur Herstellung eines Zellenstapels gemäß einer zehnten Ausführungsform.

Diese Ausführungsform ist ähnlich derjenigen aus Figur 5 (konvexe Ausgestaltung der GDL-Rollenware 1 in Schichtdickenrichtung z), mit dem Unterschied, dass die zu GDL #1-#4 vereinzelten GDL beispielhaft wiederum nur für die Anodenseite, also ausschließlich als AGDL 7 verwendet werden. Somit wird GDL #1 als AGDL 7 in der ersten Einzelzelle 9, in der zweiten Einzelzelle 10 in der dritten Einzelzelle 11 und in der vierten Einzelzelle 12 eingesetzt.

Durch die Drehung der zweiten und der vierten GDL #2, #4 in Quermaschinenrichtung y wird nach Assemblierung des Zellstapels 2 (zur Vereinfachung sind die KGDL 8 erneut weggelassen), wie in Figur 11f gezeigt, über den gesamten Zellenstapel 2 hinweg auf der Anodenseite durch die entsprechende Ausrichtung der AGDL 7 eine Verminderung des Dickenunterschieds bzw. der Dickenvariation erreicht. Die AGDL 7 werden also so im Zellenstapel 2 angeordnet, dass sich ihre Dickenvariation reduziert, wodurch eine sehr homogene Druckverteilung über alle Schichten des Zellstapels 2 erzielt werden kann, und sich der Zellstapel 2 durch eine dauerhaft hohe Leistungsdichte auszeichnet.

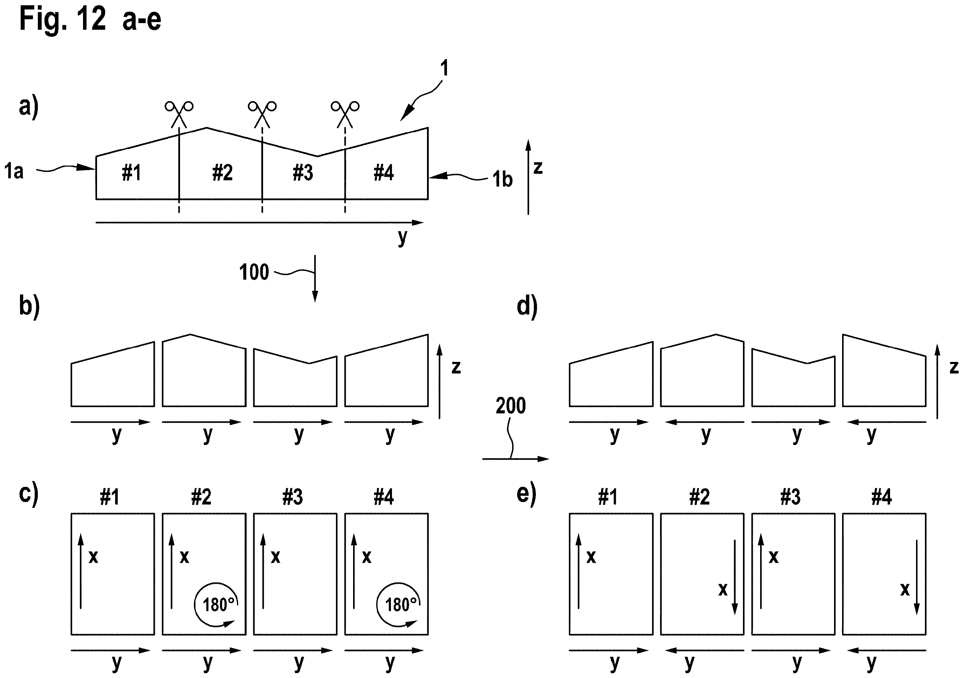

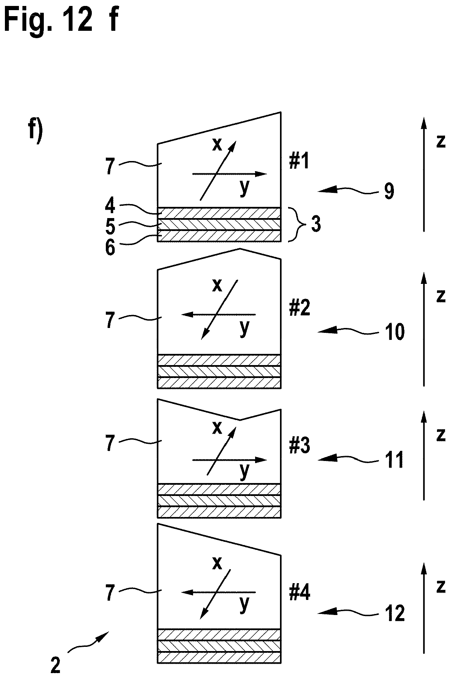

Figur 12 veranschaulicht ein Verfahren zur Herstellung eines Zellenstapels gemäß einer elften Ausführungsform.

Diese Ausführungsform ist ähnlich derjenigen aus Figur 6 (Wellenform), mit dem Unterschied, dass die zu GDL #1-#4 vereinzelten GDL beispielhaft nur für die Anodenseite, also ausschließlich als AGDL 7 verwendet werden. Somit wird GDL #1 als AGDL 7 in der ersten Einzelzelle 9, in der zweiten Einzelzelle 10 in der dritten Einzelzelle 11 und in der vierten Einzelzelle 12 eingesetzt.

Durch die Drehung der zweiten und der vierten GDL #2, #4 in Quermaschinenrichtung y wird nach Assemblierung des Zellstapels 2 (zur Vereinfachung sind die KGDL 8 weggelassen), wie in Figur 9f gezeigt, über den gesamten Zellenstapel 2 hinweg auf der Anodenseite durch die entsprechende Ausrichtung der AGDL 7 ein Ausgleich des Dickenunterschieds bzw. der Dickenvariation erreicht. Die AGDL 7 werden also so im Zellenstapel 2 angeordnet, dass sich ihre Dickengradienten aufheben, wodurch eine sehr homogene Druckverteilung über alle Schichten des Zellstapels 2 erzielt werden kann, und sich der Zellstapel 2 durch eine dauerhaft hohe Leistungsdichte auszeichnet.

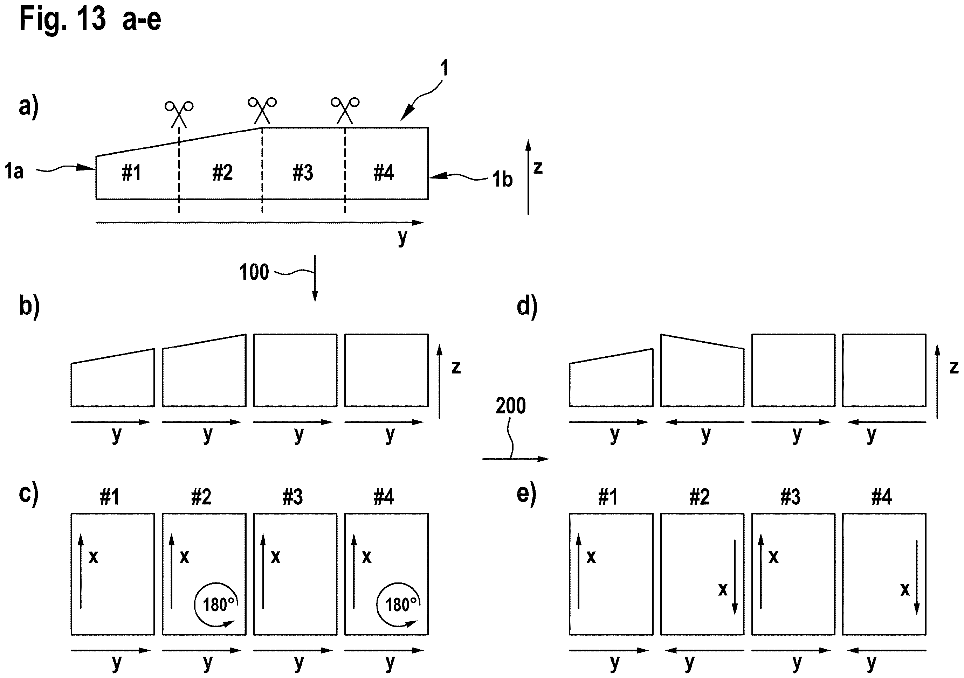

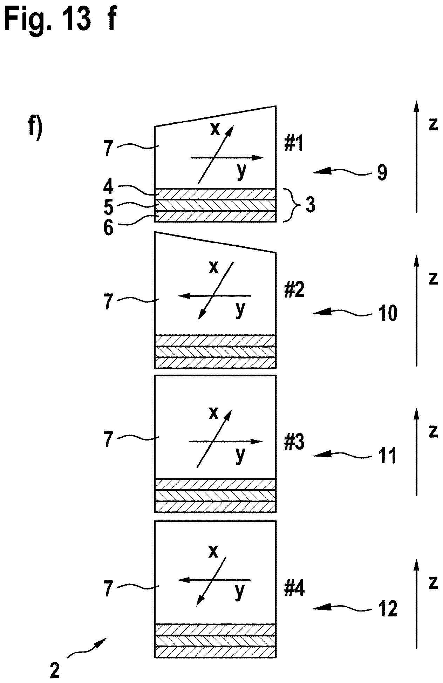

Figur 13 veranschaulicht ein Verfahren zur Herstellung eines Zellenstapels gemäß einer zwölften Ausführungsform.

Diese Ausführungsform ist ähnlich derjenigen aus Figur 7 (zunehmende Schichtdicke in erster und zweiter GDL #1, #2 und konstante Schichtdicke in der dritten und vierten GDL #3, #4), mit dem Unterschied, dass die zu GDL #1-#4 vereinzelten GDL beispielhaft wiederum nur für die Anodenseite, also ausschließlich als AGDL 7 verwendet werden. Somit wird GDL #1 als AGDL 7 in der ersten Einzelzelle 9, in der zweiten Einzelzelle 10 in der dritten Einzelzelle 11 und in der vierten Einzelzelle 12 eingesetzt.

Durch die Drehung der zweiten und der vierten GDL #2, #4 in Quermaschinenrichtung y wird nach Assemblierung des Zellstapels 2 (zur Vereinfachung sind die KGDL 8 erneut weggelassen), wie in Figur 13f gezeigt, über den gesamten Zellenstapel 2 hinweg auf der Anodenseite durch die entsprechende Ausrichtung der AGDL 7 eine Verminderung des Dickenunterschieds bzw. der Dickenvariation erreicht. Die AGDL 7 werden also so im Zellenstapel 2 angeordnet, dass sich ihre Dickenvariation reduziert, wodurch eine sehr homogene Druckverteilung über alle Schichten des Zellstapels 2 erzielt werden kann, und sich der Zellstapel 2 durch eine dauerhaft hohe Leistungsdichte auszeichnet.

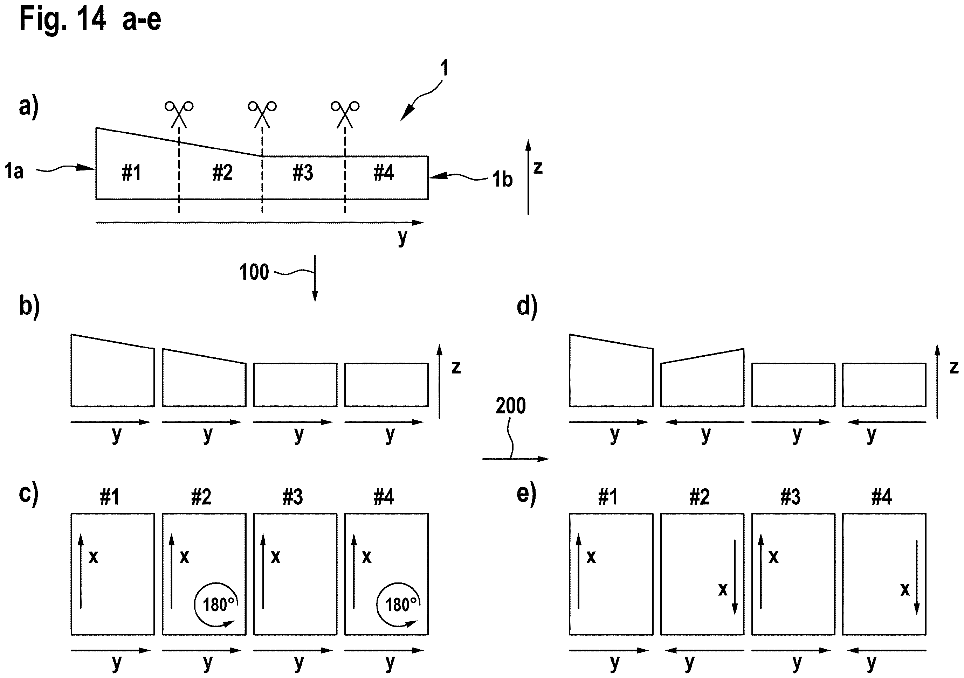

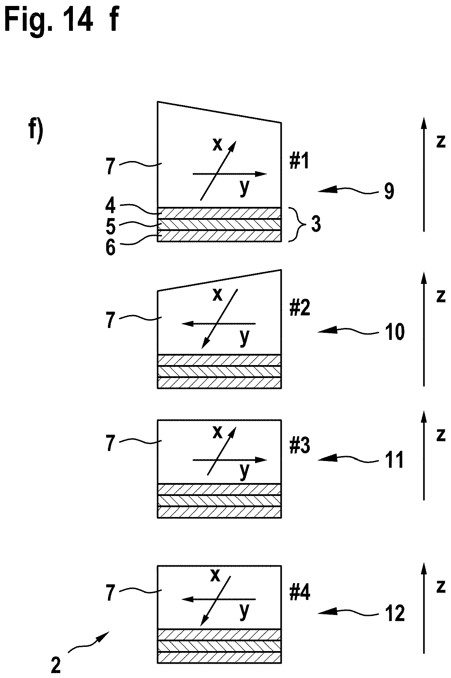

Figur 14 veranschaulicht ein Verfahren zur Herstellung eines Zellenstapels gemäß einer dreizehnten Ausführungsform.

Diese Ausführungsform ist ähnlich derjenigen aus Figur 8 (abnehmende Schichtdicke in erster und zweiter GDL #1, #2 und konstante Schichtdicke in der dritten und vierten GDL #3, #4), mit dem Unterschied, dass die zu GDL #1-#4 vereinzelten GDL beispielhaft wiederum nur für die Anodenseite, also ausschließlich als AGDL 7 verwendet werden. Somit wird GDL #1 als AGDL 7 in der ersten Einzelzelle 9, in der zweiten Einzelzelle 10 in der dritten Einzelzelle 11 und in der vierten Einzelzelle 12 eingesetzt.

Durch die Drehung der zweiten und der vierten GDL #2, #4 in Quermaschinenrichtung y wird nach Assemblierung des Zellstapels 2 (zur Vereinfachung sind die KGDL 8 erneut weggelassen), wie in Figur 14f gezeigt, über den gesamten Zellenstapel 2 hinweg auf der Anodenseite durch die entsprechende Ausrichtung der AGDL 7 eine Verminderung des Dickenunterschieds bzw. der Dickenvariation erreicht. Die AGDL 7 werden also so im Zellenstapel 2 angeordnet, dass sich ihre Dickenvariation reduziert, wodurch eine sehr homogene Druckverteilung über alle Schichten des Zellstapels 2 erzielt werden kann, und sich der Zellstapel 2 durch eine dauerhaft hohe Leistungsdichte auszeichnet.

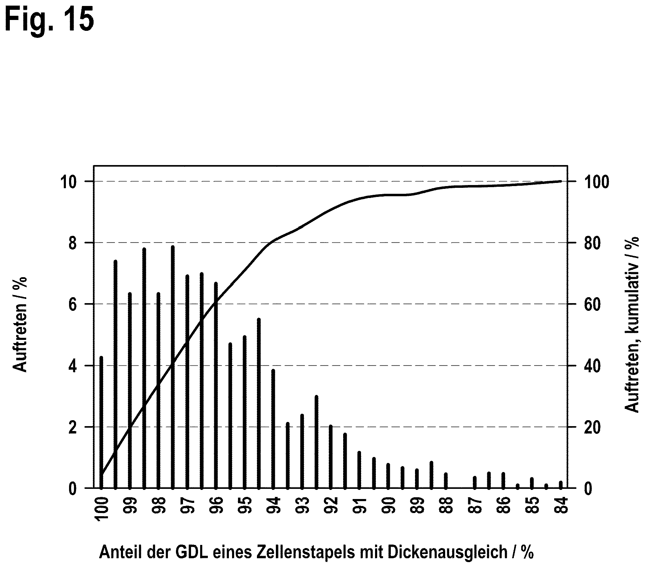

Figur 15 veranschaulicht das Ergebnis einer statistischen Drehung von GDLs gemäß einer vierzehnten Ausführungsform. Als Simulationsgrundlage dienten dabei 400 GDLs mit linearen Dickengradienten. Die Simulation wurde für 500 Zellenstapel wiederholt. In 96,2 % (481) der Fälle ergaben sich damit gleich oder weniger als 20 GDL-Paare, mit anderen Worten 40 GDL, mit anderen Worten gleich oder weniger als 10 % der Gesamtanzahl an GDL, deren Dickengradient nicht ausgeglichen wurde. Die statistische Drehung oder Nicht-Drehung von GDL führte also in über 95 % der Fälle zu einer Verringerung der Gesamtdickeninhomogenität des Zellenstapels um mehr als 90 %.

Neben der vorstehenden schriftlichen Beschreibung der Erfindung wird zu deren ergänzender Offenbarung hiermit explizit auf die zeichnerische Darstellung der Erfindung in den Fig. 1 bis 15 Bezug genommen.

### Bezugszeichenliste

- 1: GDL-Rollenware
- 1a: erster Längsrand der GDL-Rollenware
- 1b: zweiter Längsrand der GDL-Rollenware
- 2: Zellenstapel
- 2a: Zellenstapel
- 3: Membranelektrodenanordnung
- 4: Anode
- 5: Membran
- 6: Kathode
- 7: AGDL
- 8: KGDL
- 9: Einzelzelle
- 10: Einzelzelle
- 11: Einzelzelle
- 12: Einzelzelle
- #1: erste GDL
- #2: zweite GDL
- #3: dritte GDL
- #4: vierte GDL
- R1: GDL-Reihe
- R2: GDL-Reihe
- x: Längsmaschinenrichtung
- y: Quermaschinenrichtung
- z: Schichtdickenrichtung

## Patentansprüche

1. Zellenstapel umfassend eine Vielzahl an Einzelzellen (9, 10, 11, 12), wobei jede Einzelzelle (9, 10, 11, 12) eine Membranelektrodenanordnung (3) mit einer Kathode (6), einer Anode (4) und einer dazwischenliegenden Membran (5), sowie eine auf der freiliegenden Seite der Anode (4) angeordnete Anodengasdiffusionslage (7) mit einem ersten Dickengradient in Quermaschinenrichtung (y) oder eine gesinterte Titankomponente und eine auf der freiliegenden Seite der Kathode (6) angeordnete Kathodengasdiffusionslage (8) mit einem zweiten Dickengradient in Quermaschinenrichtung (y) umfasst, wobei
a) in einer Einzelzelle (9, 10, 11, 12) die Anodengasdiffusionslage (7) und die Kathodengasdiffusionslage (8) so zueinander angeordnet sind, dass der erste Dickengradient der Anodengasdiffusionslage (7) und der zweite Dickengradient der Kathodengasdiffusionslage (8) gegenläufig sind oder
b) in zwei oder mehr Einzelzellen (9, 10, 11, 12) die Anodengasdiffusionslagen (7) so zueinander angeordnet sind, dass ein Gesamtdickengradient dieser Anodengasdiffusionslagen (7) minimiert ist und/oder wobei in zwei oder mehr Einzelzellen (9, 10, 11, 12) die Kathodengasdiffusionslagen (8) so zueinander angeordnet sind, dass ein Gesamtdickengradient dieser Kathodengasdiffusionslagen (8) minimiert ist.

2. Zellenstapel nach Anspruch 1, wobei in allen Einzelzellen (9, 10, 11, 12) die Anodengasdiffusionslagen (7) und die Kathodengasdiffusionslagen (8) jeweils so zueinander angeordnet sind, dass der erste Dickengradient der Anodengasdiffusionslage (7) und der zweite Dickengradient der Kathodengasdiffusionslage (8) je Einzelzelle (9, 10, 11, 12) gegenläufig sind.

3. Zellenstapel nach Anspruch 1 oder 2, wobei der erste Dickengradient der Anodengasdiffusionslage (7) und der zweite Dickengradient der Kathodengasdiffusionslage (8) linear sind.

4. Zellenstapel nach einem der vorhergehenden Ansprüche, wobei die Anodengasdiffusionslage (7) und die Kathodengasdiffusionslage (8) jeweils eine mikroporöse Schicht und ein makroporöses Trägermaterial umfassen, wobei die mikroporöse Schicht der Anodengasdiffusionslage (7) zur Anode (4) orientiert ist und die mikroporöse Schicht der Kathodengasdiffusionslage (8) zur Kathode (6) orientiert ist.

5. Zellenstapel nach einem der vorhergehenden Ansprüche, wobei die Anodengasdiffusionslage (7) und/oder die Kathodengasdiffusionslage (8) einer Einzelzelle (9, 10, 11, 12) eine Schichtdicke in einem Bereich von 100 µm bis 300 µm aufweisen und/oder
wobei das Trägermaterial ausgewählt ist aus einem Vlies-Typ und einem Papier-Typ und/oder
wobei die Membranelektrodenanordnung (3) umlaufend durch ein Randmaterial eingefasst ist.

6. Brennstoffzelle oder Elektrolysezelle umfassend einen Zellenstapel (2) nach einem der vorhergehenden Ansprüche.

7. Verfahren zur Herstellung eines Zellenstapels (2) umfassend eine Vielzahl an Einzelzellen (9, 10, 11, 12), wobei jede Einzelzelle (9, 10, 11, 12) eine Membranelektrodenanordnung (3) mit einer Kathode (6), einer Anode (4) und einer dazwischenliegenden Membran (5), sowie eine auf der freiliegenden Seite der Anode (4) angeordnete Anodengasdiffusionslage (7) mit einem ersten Dickengradient in Quermaschinenrichtung (y) oder eine gesinterte Titankomponente und eine auf der freiliegenden Seite der Kathode (6) angeordnete Kathodengasdiffusionslage (8) mit einem zweiten Dickengradient in Quermaschinenrichtung (y) umfasst, wobei
a) in einer Einzelzelle (9, 10, 11, 12) die Anodengasdiffusionslage (7) und die Kathodengasdiffusionslage (8) so zueinander angeordnet werden, dass der erste Dickengradient der Anodengasdiffusionslage (7) und der zweite Dickengradient der Kathodengasdiffusionslage (8) gegenläufig sind oder
b) in zwei oder mehr Einzelzellen (9, 10, 11, 12) die Anodengasdiffusionslagen (7) so zueinander angeordnet werden, dass ein Gesamtdickengradient dieser Anodengasdiffusionslagen (7) minimiert wird und/oder wobei in zwei oder mehr Einzelzellen (9, 10, 11, 12) die Kathodengasdiffusionslagen (8) so zueinander angeordnet werden, dass ein Gesamtdickengradient dieser Kathodengasdiffusionslagen (8) minimiert wird.

8. Verfahren nach Anspruch 7, wobei die Gasdiffusionslagen als Rollenware (1) bereitgestellt und zu Gasdiffusionslagen vereinzelt werden, wobei zum Vereinzeln der Gasdiffusionslagen Gasdiffusionslagen nacheinander von einer Rolle (1) in Quermaschinenrichtung (y) entnommen und nacheinander entnommene Gasdiffusionslagen so verwendet werden, dass jede zweite entnommene Gasdiffusionslagen um 180° relativ zur Quermaschinenrichtung (y) gedreht wird und die nicht gedrehten Gasdiffusionslagen und die gedrehten Gasdiffusionslagen abwechselnd als Anodengasdiffusionslage (7) und als Kathodengasdiffusionslage (8) für eine Einzelzelle (9, 10, 11, 12) verwendet werden.

9. Verfahren nach Anspruch 7, wobei die Gasdiffusionslagen als Rollenware (1) bereitgestellt und zu Gasdiffusionslagen vereinzelt werden, wobei zum Vereinzeln der Gasdiffusionslagen Gasdiffusionslagen nacheinander von einer Rolle (1) in Quermaschinenrichtung (y) entnommen und nacheinander entnommene Gasdiffusionslagen jeweils übereinander gestapelt werden, wobei jede zweite der übereinander zu stapelnden oder gestapelten Gasdiffusionslagen um 180° relativ zur Quermaschinenrichtung (y) gedreht wird und übereinander gestapelte Gasdiffusionslagen als Anodengasdiffusionslagen (7) oder Kathodengasdiffusionslagen (8) übereinander angeordneter Einzelzellen (9, 10, 11, 12) des Zellenstapels (2) verwendet werden.

10. Verfahren nach Anspruch 7, wobei die Gasdiffusionslagen als Rollenware (1) bereitgestellt und zu Gasdiffusionslagen vereinzelt werden, wobei zum Vereinzeln der Gasdiffusionslagen Gasdiffusionslagen nacheinander von einer Rolle (1) in Quermaschinenrichtung (y) entnommen und nacheinander entnommene Gasdiffusionslagen jeweils übereinander gestapelt werden, und wobei über einen Zufallsgenerator ermittelte Gasdiffusionslagen um 180° relativ zur Quermaschinenrichtung (y) gedreht werden, wobei Drehung oder Nicht-Drehung die gleiche Wahrscheinlichkeit aufweisen.

## Claims

1. A cell stack comprising a plurality of single cells (9, 10, 11, 12), wherein each single cell (9, 10, 11, 12) comprises a membrane electrode assembly (3) having a cathode (6), an anode (4), and an interposed membrane (5), as well as an anode gas diffusion layer (7) arranged on the exposed side of the anode (4) having a first thickness gradient in the transverse machine direction (y) or a sintered titanium component and a cathode gas diffusion layer (8) arranged on the exposed side of the cathode (6) having a second thickness gradient in the transverse machine direction (y), wherein
a) in a single cell (9, 10, 11, 12), the anode gas diffusion layer (7) and the cathode gas diffusion layer (8) are arranged in relation to one another such that the first thickness gradient of the anode gas diffusion layer (7) and the second thickness gradient of the cathode gas diffusion layer (8) run opposite to one another or
b) in two or more single cells (9, 10, 11, 12), the anode gas diffusion layers (7) are arranged in relation to one another such that an overall thickness gradient of these anode gas diffusion layers (7) is minimized and/or wherein in two or more single cells (9, 10, 11, 12), the cathode gas diffusion layers (8) are arranged in relation to one another such that an overall thickness gradient of these cathode gas diffusion layers (8) is minimized.

2. The cell stack as claimed in claim 1, wherein in all single cells (9, 10, 11, 12) the anode gas diffusion layers (7) and the cathode gas diffusion layers (8) are each arranged in relation to one another such that the first thickness gradient of the anode gas diffusion layer (7) and the second thickness gradient of the cathode gas diffusion layer (8) run opposite to one another per single cell (9, 10, 11, 12).

3. The cell stack as claimed in claim 1 or 2, wherein the first thickness gradient of the anode gas diffusion layer (7) and the second thickness gradient of the cathode gas diffusion layer (8) are linear.

4. The cell stack as claimed in any one of the preceding claims, wherein the anode gas diffusion layer (7) and the cathode gas diffusion layer (8) each comprise a microporous layer and a macroporous carrier material, wherein the microporous layer of the anode gas diffusion layer (7) is oriented to the anode (4) and the microporous layer of the cathode gas diffusion layer (8) is oriented to the cathode (6).

5. The cell stack as claimed in any one of the preceding claims, wherein the anode gas diffusion layer (7) and/or the cathode gas diffusion layer (8) of a single cell (9, 10, 11, 12) have a layer thickness in a range of 100 µm to 300 µm and/or
wherein the carrier material is selected from a fleece-type and a paper-type and/or
wherein the membrane electrode assembly (3) is circumferentially framed by an edging material.

6. A fuel cell or electrolysis cell comprising a cell stack (2) as claimed in any one of the preceding claims.

7. A method for producing a cell stack (2) comprising a plurality of single cells (9, 10, 11, 12), wherein each single cell (9, 10, 11, 12) comprises a membrane electrode assembly (3) having a cathode (6), an anode (4), and an interposed membrane (5), as well as an anode gas diffusion layer (7) arranged on the exposed side of the anode (4) having a first thickness gradient in the transverse machine direction (y) or a sintered titanium component and a cathode gas diffusion layer (8) arranged on the exposed side of the cathode (6) having a second thickness gradient in the transverse machine direction (y), wherein
a) in a single cell (9, 10, 11, 12), the anode gas diffusion layer (7) and the cathode gas diffusion layer (8) are arranged in relation to one another such that the first thickness gradient of the anode gas diffusion layer (7) and the second thickness gradient of the cathode gas diffusion layer (8) run opposite to one another or
b) in two or more single cells (9, 10, 11, 12), the anode gas diffusion layers (7) are arranged in relation to one another such that an overall thickness gradient of these anode gas diffusion layers (7) is minimized and/or wherein in two or more single cells (9, 10, 11, 12) the cathode gas diffusion layers (8) are arranged in relation to one another such that an overall thickness gradient of these cathode gas diffusion layers (8) is minimized.

8. The method as claimed in claim 7, wherein the gas diffusion layers are provided as a rolled product (1) and are singularized to form gas diffusion layers, wherein to singularize the gas diffusion layers, gas diffusion layers are removed in succession from a roll (1) in the transverse machine direction (y) and gas diffusion layers removed in succession are used such that each second removed gas diffusion layer is rotated by 180° relative to the transverse machine direction (y) and the nonrotated gas diffusion layers and the rotated gas diffusion layers are alternately used as the anode gas diffusion layer (7) and as the cathode gas diffusion layer (8) for a single cell (9, 10, 11, 12).

9. The method as claimed in claim 7, wherein the gas diffusion layers are provided as a rolled product (1) and are singularized to form gas diffusion layers, wherein to singularize the gas diffusion layers, gas diffusion layers are removed in succession from a roll (1) in the transverse machine direction (y) and gas diffusion layers removed in succession are each stacked one on top of another, wherein each second one of the gas diffusion layers to be stacked or which are stacked on one another is rotated by 180° relative to the transverse machine direction (y) and gas diffusion layers stacked on one another are used as anode gas diffusion layers (7) or cathode gas diffusion layers (8) of single cells (9, 10, 11, 12) of the cell stack (2), which are arranged one on top of another.

10. The method as claimed in claim 7, wherein the gas diffusion layers are provided as a rolled product (1) and are singularized to form gas diffusion layers, wherein to singularize the gas diffusion layers, gas diffusion layers are removed in succession from a roll (1) in the transverse machine direction (y) and gas diffusion layers removed in succession are each stacked one on top of another, and wherein gas diffusion layers ascertained via a random generator are rotated by 180° relative to the transverse machine direction (y), wherein rotation or nonrotation have the same probability.

## Revendications

1. Empilement de cellules comprenant une pluralité de cellules individuelles (9, 10, 11, 12), dans lequel chaque cellule individuelle (9, 10, 11, 12) comprend un ensemble d'électrodes à membrane (3) avec une cathode (6), une anode (4) et une membrane (5) située de manière intercalée, ainsi qu'une couche de diffusion de gaz d'anode (7) disposée sur le côté exposé de l'anode (4) avec un premier gradient d'épaisseur dans une direction de machine transversale (y) ou un composant de titane fritté et une couche de diffusion de gaz de cathode (8) disposée sur le côté exposé de la cathode (6) avec un deuxième gradient d'épaisseur dans la direction de machine transversale (y), dans lequel
a) la couche de diffusion de gaz d'anode (7) et la couche de diffusion de gaz de cathode (8) sont disposées l'une par rapport à l'autre dans une cellule individuelle (9, 10, 11, 12) de telle sorte que le premier gradient d'épaisseur de la couche de diffusion de gaz d'anode (7) et le deuxième gradient d'épaisseur de la couche de diffusion de gaz de cathode (8) sont opposés, ou
b) les couches de diffusion de gaz d'anode (7) sont disposées les unes par rapport aux autres de telle sorte dans deux cellules individuelles (9, 10, 11, 12) ou plus qu'un gradient d'épaisseur total desdites couches de diffusion de gaz d'anode (7) est réduit au minimum et/ou dans lequel les couches de diffusion de gaz de cathode (8) sont disposées de telle sorte les unes par rapport aux autres dans deux cellules individuelles (9, 10, 11, 12) ou plus qu'un gradient d'épaisseur total desdites couches de diffusion de gaz de cathode (8) est réduit au minimum.

2. Empilement de cellules selon la revendication 1, dans lequel les couches de diffusion de gaz d'anode (7) et les couches de diffusion de gaz de cathode (8) sont disposées respectivement, dans toutes les cellules individuelles (9, 10, 11, 12), les unes par rapport aux autres de telle sorte que le premier gradient d'épaisseur de la couche de diffusion de gaz d'anode (7) et le deuxième gradient d'épaisseur de la couche de diffusion de gaz de cathode (8) sont opposés par cellule individuelle (9, 10, 11, 12).

3. Empilement de cellules selon la revendication 1 ou 2, dans lequel le premier gradient d'épaisseur de la couche de diffusion de gaz d'anode (7) et le deuxième gradient d'épaisseur de la couche de diffusion de gaz de cathode (8) sont linéaires.

4. Empilement de cellules selon l'une quelconque des revendications précédentes, dans lequel la couche de diffusion de gaz d'anode (7) et la couche de diffusion de gaz de cathode (8) comprennent respectivement une couche microporeuse et un matériau de support macroporeux, dans lequel la couche microporeuse de la couche de diffusion de gaz d'anode (7) est orientée vers l'anode (4) et la couche microporeuse de la couche de diffusion de gaz de cathode (8) est orientée vers la cathode (6).

5. Empilement de cellules selon l'une quelconque des revendications précédentes, dans lequel la couche de diffusion de gaz d'anode (7) et/ou la couche de diffusion de gaz de cathode (8) d'une cellule individuelle (9, 10, 11, 12) présentent une épaisseur de couche dans une plage de 100 µm à 300 µm, et/ou
dans lequel le matériau de support est choisi parmi un type de non-tissé et un type de papier, et/ou
dans lequel l'ensemble d'électrodes à membrane (3) est encadré en périphérie par un matériau de bord.

6. Pile à combustible ou cellule électrolytique comprenant un empilement de cellules (2) selon l'une quelconque des revendications précédentes.

7. Procédé de fabrication d'un empilement de cellules (2) comprenant une pluralité de cellules individuelles (9, 10, 11, 12), dans lequel chaque cellule individuelle (9, 10, 11, 12) comprend un ensemble d'électrodes à membrane (3) avec une cathode (6), une anode (4) et une membrane (5) située de manière intercalée, ainsi qu'une couche de diffusion de gaz d'anode (7) disposée sur le côté exposé de l'anode (4) avec un premier gradient d'épaisseur dans la direction de machine transversale (y) ou un composant de titane fritté et une couche de diffusion de gaz de cathode (8) disposée sur le côté exposé de la cathode (6) avec un deuxième gradient d'épaisseur dans la direction de machine transversale (y), dans lequel
a) la couche de diffusion de gaz d'anode (7) et la couche de diffusion de gaz de cathode (8) sont disposées l'une par rapport à l'autre dans une cellule individuelle (9, 10, 11, 12) de telle sorte que le premier gradient d'épaisseur de la couche de diffusion de gaz d'anode (7) et le deuxième gradient d'épaisseur de la couche de diffusion de gaz de cathode (8) sont opposés, ou
b) les couches de diffusion de gaz d'anode (7) sont disposées les unes par rapport aux autres de telle sorte dans deux cellules individuelles (9, 10, 11, 12) ou plus qu'un gradient d'épaisseur total desdites couches de diffusion de gaz d'anode (7) est réduit au minimum et/ou dans lequel les couches de diffusion de gaz de cathode (8) sont disposées de telle sorte les unes par rapport aux autres dans deux cellules individuelles (9, 10, 11, 12) ou plus qu'un gradient d'épaisseur total desdites couches de diffusion de gaz de cathode (8) est réduit au minimum.

8. Procédé selon la revendication 7, dans lequel les couches de diffusion de gaz sont fournies en tant que marchandise en rouleau (1) et sont séparées en couches de diffusion de gaz, dans lequel les couches de diffusion de gaz sont retirées les unes après les autres d'un rouleau (1) dans la direction de machine transversale (y) pour séparer les couches de diffusion de gaz et des couches de diffusion de gaz retirées les unes après les autres sont utilisées de telle sorte que chaque deuxième couche de diffusion de gaz retirée est tournée de 180° par rapport à la direction de machine transversale (y) et les couches de diffusion de gaz non tournées et les couches de diffusion de gaz tournées sont utilisées en alternance en tant que couche de diffusion de gaz d'anode (7) et en tant que couche de diffusion de gaz de cathode (8) pour une cellule individuelle (9, 10, 11, 12).

9. Procédé selon la revendication 7, dans lequel les couches de diffusion de gaz sont fournies en tant que marchandise en rouleaux (1) et sont séparées en des couches de diffusion de gaz, dans lequel des couches de diffusion de gaz sont retirées les unes après les autres d'un rouleau (1) dans la direction de machine transversale (y) pour séparer les couches de diffusion de gaz et des couches de diffusion de gaz retirées les unes après les autres sont empilées respectivement les unes par-dessus les autres, dans lequel chaque deuxième couche de diffusion de gaz des couches de diffusion de gaz à empiler ou empilées les unes par-dessus les autres est tournée de 180° par rapport à la direction de machine transversale (y) et des couches de diffusion de gaz empilées les unes par-dessus les autres sont utilisées en tant que couches de diffusion de gaz d'anode (7) ou en tant que couches de diffusion de gaz de cathode (8) de couches individuelles (9, 10, 11, 12) disposées les unes par-dessus les autres de l'empilement de cellules (2).

10. Procédé selon la revendication 7, dans lequel les couches de diffusion de gaz sont fournies en tant que marchandise en rouleaux (1) et sont séparées en couches de diffusion de gaz, dans lequel des couches de diffusion de gaz sont retirées les unes après les autres d'un rouleau (1) dans la direction de machine transversale (y) pour séparer les couches de diffusion de gaz et des couches de diffusion de gaz retirées les unes après les autres sont empilées respectivement les unes par-dessus les autres, et dans lequel des couches de diffusion de gaz déterminées par l'intermédiaire d'un générateur aléatoire sont tournées de 180° par rapport à la direction de machine transversale (y), dans lequel la rotation ou la non-rotation présentent la même probabilité.
